(19) Europäisches Patentamt
European Patent Office
Office européen des brevets

(11) EP 4 166 579 A1

(12) EUROPEAN PATENT APPLICATION
published in accordance with Art. 153(4) EPC

(43) Date of publication:
**19.04.2023 Bulletin 2023/16**

(21) Application number: **21838872.6**

(22) Date of filing: **07.07.2021**

(51) International Patent Classification (IPC):
***C08F 20/22*** *(2006.01)* ***C08F 257/02*** *(2006.01)*
***C09D 201/00*** *(2006.01)* ***C08F 2/18*** *(2006.01)*
***C08F 2/44*** *(2006.01)* ***B01J 13/02*** *(2006.01)*
***C09D 7/65*** *(2018.01)*

(52) Cooperative Patent Classification (CPC):
**B01J 13/02; C08F 2/18; C08F 2/44; C08F 20/22; C08F 257/02; C09D 7/65; C09D 201/00**

(86) International application number:
**PCT/JP2021/025578**

(87) International publication number:
**WO 2022/009917 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.07.2020 JP 2020118644**

(71) Applicants:
- **Daikin Industries, Ltd.**
  **Osaka-shi, Osaka 530-8323 (JP)**
- **National University Corporation Kobe University**
  **Kobe-shi, Hyogo 657-8501 (JP)**

(72) Inventors:
- **TANAKA, Yoshito**
  **Osaka-Shi, Osaka 530-8323 (JP)**
- **IIDA, Mayumi**
  **Osaka-Shi, Osaka 530-8323 (JP)**
- **MINAMI, Hideto**
  **Kobe-shi, Hyogo 657-8501 (JP)**

(74) Representative: **Hoffmann Eitle**
**Patent- und Rechtsanwälte PartmbB**
**Arabellastraße 30**
**81925 München (DE)**

# (54) MANUFACTURING METHOD FOR HOLLOW FINE PARTICLES, AND HOLLOW FINE PARTICLES

(57) The disclosure provides a production method capable of producing a hollow fine particulate containing a fluorine-containing resin and having a large average particle size. The method for producing a hollow fine particulate includes dispersing a solution containing a fluorine-containing monomer, a phase separation promoter, and a non-polymerizable solvent into water to provide a dispersion, and polymerizing the fluorine-containing monomer to provide a hollow fine particulate containing a fluorine-containing resin.

FIG.2

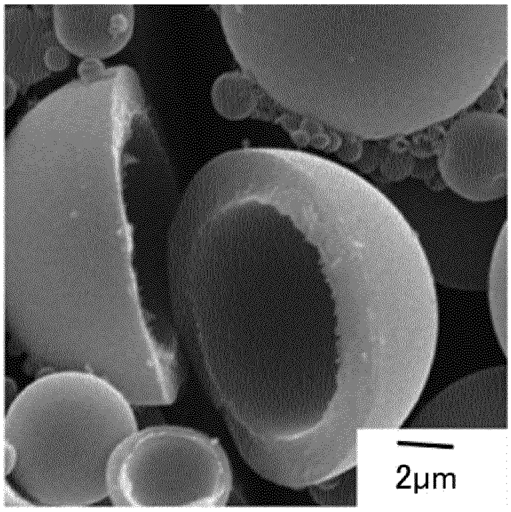


EP 4 166 579 A1

**Description**

TECHNICAL FIELD

The disclosure relates to methods for producing a hollow fine particulate and to hollow fine particulates.

BACKGROUND ART

Hollow fine particulates having a pore therein are excellent for achievement of light weight, low refractive index, low dielectricity, and other characteristics and are therefore examined in various studies. Such hollow fine particulates are conventionally formed from inorganic particles, but inorganic particles are heavy in weight. This therefore leads to current studies on hollow fine particulates formed from a polymer instead of inorganic particles.

For example, Patent Literature 1 discloses hollow fine resin particles containing a resin having a fluorine atom, wherein the hollow resin fine particles have an average particle size of 10 to 200 nm, a porosity of 10% or higher, and a refractive index of 1.30 or lower.

Patent Literature 2 discloses a method for producing a fine particle enclosing a target component, including dispersing a mixture of a target component, a specific monomer component, a specific auxiliary polymer, and an initiator into an aqueous solution of a dispersion stabilizer and performing suspension polymerization.

CITATION LIST

- Patent Literature

Patent Literature 1: JP 2005-213366 A
Patent Literature 2: JP 2003-96108 A

SUMMARY OF INVENTION

- Technical Problem

The disclosure provides a method for producing a hollow fine particulate containing a fluorine-containing resin and having a large average particle size. The disclosure also provides a hollow fine particulate containing a fluorine-containing resin and having a large average particle size.

- Solution to Problem

The disclosure relates to a method for producing a hollow fine particulate including: dispersing a solution containing a fluorine-containing monomer, a phase separation promoter, and a non-polymerizable solvent into water to provide a dispersion; and polymerizing the fluorine-containing monomer to provide a hollow fine particulate containing a fluorine-containing resin.

Preferably, the fluorine-containing monomer is a monomer ($B^1$) represented by the following formula ($B^1$) :

$$CX^1X^2=CY^1Z \qquad (B^1)$$

wherein

$X^1$, $X^2$, and $Y^1$ are each independently H, $CH_3$, F, or Cl;
Z is

F,
a group represented by $-Q-Rf^1-Y$, wherein Q is a single bond, -O-, -O-(C=O)-, or -C(=O)-O-; $Rf^1$ is a C1-C20 fluorine-containing alkylene group optionally containing an ether bond between carbon atoms; and Y is F, H, -OH, -COOH, or -COOR, wherein R is a C1-C20 alkyl group,
a group represented by the following formula:

[Chem. 1]

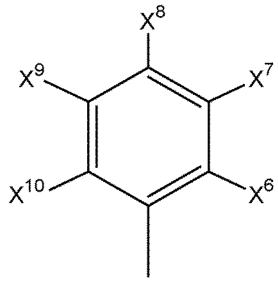

wherein $X^6$ to $X^{10}$ are each independently a hydrogen atom, a fluorine atom, or a C1-C8 hydrocarbon group optionally substituted with fluorine or chlorine, or $-SO_3H$, and

any of $X^1$, $X^2$, $Y^1$, and Z contains one or more F atoms.

More preferably, the fluorine-containing monomer is a fluorine-containing acrylic monomer ($C^1$) represented by the following formula ($C^1$):

$$CH_2{=}CX^3\text{-}COORf^2 \qquad (C^1)$$

wherein $X^3$ is H, $CH_3$, F, Cl, or $CF_3$; and $Rf^2$ is a C1-C20 fluorine-containing alkyl group optionally containing an ether bond between carbon atoms.

Preferably, the phase separation promoter is dissolvable in the non-polymerizable solvent at room temperature and satisfies a relationship of the following formula:

$$|SA - SB| < 3\ (J/cm^3)^{1/2}$$

wherein SA represents an Sp value $(J/cm^3)^{1/2}$ of the phase separation promoter; and SB represents an Sp value $(J/cm^3)^{1/2}$ of the non-polymerizable solvent.

Also preferably, the phase separation promoter is a polymer containing a polymerized unit based on a monomer represented by the following formula:

$$CH_2{=}CX^4Y^2$$

wherein $X^4$ is H, $CH_3$, F, Cl, or $CF_3$; and $Y^2$ is Cl, $C_6H_4R^1$, $C_6H_3R^2R^3$, $COOR^4$, or $OCOR^5$, wherein $R^1$, $R^2$, $R^3$, $R^4$, and $R^5$ are each independently H, OH, or a C1-C40 alkyl group optionally substituted with a halogen atom. More preferably, the phase separation promoter includes at least one selected from the group consisting of an aromatic vinyl polymer and a polyalkyl (meth)acrylate.

The fluorine-containing monomer preferably has a fluorine content of 30% by mass or higher.

The solution preferably further contains a crosslinkable monomer.

The non-polymerizable solvent is preferably an aromatic hydrocarbon, an ester, or a C8-C18 saturated hydrocarbon or halogen-substituted product thereof.

The dispersing preferably includes: dispersing the solution into water at a temperature of 50°C or higher to provide a dispersion, or dispersing the solution into water at a temperature lower than 50°C to provide a dispersion and heating the dispersion obtained to a temperature of 50°C or higher.

The production method of the disclosure preferably further includes adding an oil-soluble initiator to the dispersion after the dispersing and before the polymerizing.

The method preferably further includes removing the non-polymerizable solvent from the hollow fine particulate obtained in the polymerizing.

The hollow fine particulate preferably has an average particle size of 1.0 μm or greater.

The disclosure also relates to a hollow fine particulate containing a fluorine-containing resin D containing a polymerized unit based on a fluorine-containing monomer, the hollow fine particulate having an average particle size of 1.0 μm or greater.

Preferably, the fluorine-containing monomer is a monomer ($B^2$) represented by the following formula ($B^2$):

$CX^1X^2=CY^1Z$ (B$^2$)

wherein

$X^1$, $X^2$, and $Y^1$ are the same as or different from each other and are each independently H, $CH_3$, F, or Cl;
Z is

F,
a group represented by $-Q-Rf^1-Y$, wherein Q is a single bond, -O-, -O-(C=O)-, or -C(=O)-O-; $Rf^1$ is a C1-C20 fluorine-containing alkylene group optionally containing an ether bond between carbon atoms; and Y is F, H, -OH, -COOH, or -COOR, wherein R is a C1-C20 alkyl group,
a group represented by the following formula:

[Chem. 2]

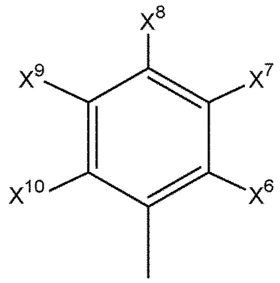

wherein $X^6$ to $X^{10}$ are each independently a hydrogen atom, a fluorine atom, or a C1-C8 hydrocarbon group optionally substituted with fluorine or chlorine, or
$-SO_3H$, and

any of $X^1$, $X^2$, $Y^1$, and Z contains one or more F atoms.

Also preferably, the fluorine-containing monomer is a fluorine-containing acrylic monomer (C$^2$) represented by the following formula (C$^2$):

$CH_2=CX^3-COORf^2$ (C$^2$)

wherein $X^3$ is H, $CH_3$, F, Cl, or $CF_3$; and $Rf^2$ is a C1-C20 fluorine-containing alkyl group optionally containing an ether bond between carbon atoms.
The hollow fine particulate preferably further contains a phase separation promoter.
Preferably, the phase separation promoter is a polymer containing a polymerized unit based on a monomer represented by the following formula:

$CH_2=CX^4Y^2$

wherein $X^4$ is H, $CH_3$, F, Cl, or $CF_3$; and $Y^2$ is Cl, $C_6H_4R^1$, $C_6H_3R^2R^3$, $COOR^4$, or $OCOR^5$, wherein $R^1$, $R^2$, $R^3$, $R^4$, and $R^5$ are each independently H, OH, or a C1-C40 alkyl group optionally substituted with a halogen atom. More preferably, the phase separation promoter includes at least one selected from the group consisting of an aromatic vinyl polymer and a polyalkyl (meth)acrylate.
The fluorine-containing resin D preferably further contains a polymerized unit based on a crosslinkable monomer.
The fluorine-containing resin D preferably has a fluorine content of 15% by mass or higher.
Preferably, the hollow fine particulate of the disclosure includes a shell containing the fluorine-containing resin D and a hollow portion and has a monoporous structure.
The disclosure also relates to a curable composition containing the hollow fine particulate.
The disclosure also relates to a coating composition containing the hollow fine particulate.
The hollow fine particulate of the disclosure is preferably for the use as an electronic material.

- Advantageous Effects of Invention

The method for producing a hollow fine particulate of the disclosure can provide a hollow fine particulate containing a fluorine-containing resin and having a large average particle size. The hollow fine particulate of the disclosure can have a large average particle size even though it contains a fluorine-containing resin.

BRIEF DESCRIPTION OF THE DRAWINGS

FIG. 1A is an optical micrograph of suspended droplets before polymerization in Example 1, and FIG. 1B is an optical micrograph of a hollow fine particulate after the polymerization.
FIG. 2 is a SEM image of the hollow fine particulate after the polymerization in Example 1.
FIG. 3A is an optical micrograph of suspended droplets before polymerization in Example 2, and FIG. 3B is an optical micrograph of a fine particulate after the polymerization.
FIG. 4A is an optical micrograph of suspended droplets before polymerization in Comparative Example 2, and FIG. 4B is an optical micrograph of a fine particulate after the polymerization.
FIG. 5A is an optical micrograph of suspended droplets before polymerization in Example 4, and FIG. 5B is an optical micrograph of a hollow fine particulate after the polymerization.
FIG. 6A is a SEM image of the particulate obtained in Example 4, FIG. 6B is an EDX mapping of shell walls, and FIG. 6C is a SEM image of a broken particulate.
FIG. 7 is an optical micrograph of suspended droplets before polymerization in Example 5.
FIG. 8A is an optical micrograph of a hollow fine particulate after the polymerization in Example 5, and FIG. 8B is a SEM image of the hollow fine particulate after the polymerization.
FIG. 9 is an example of a cross-sectional SEM image of Film 2 produced in Film Formation 1.
FIG. 10 is another example of a cross-sectional SEM image of Film 2 produced in Film Formation 1.
FIG. 11 is a graph relating to the films produced in the examples, where the horizontal axis represents the amount of the fine particulate added and the vertical axis represents the dissipation factor.

DESCRIPTION OF EMBODIMENTS

The disclosure relates to a method for producing a hollow fine particulate including: dispersing a solution containing a fluorine-containing monomer, a phase separation promoter, and a non-polymerizable solvent into water to provide a dispersion; and polymerizing the fluorine-containing monomer to provide a hollow fine particulate containing a fluorine-containing resin.

The disclosers performed studies to find that conventional methods for producing a hollow fine particulate containing a fluorine-containing resin by polymerizing a fluorine-containing monomer fail to provide a hollow fine particulate having a large average particle size. The disclosers found that dispersing a solution containing a fluorine-containing monomer, a phase separation promoter, and a non-polymerizable solvent into water and then polymerizing the fluorine-containing monomer allow the resulting hollow fine particulate containing a fluorine-containing resin to have a large average particle size, thereby completing the method for producing a hollow fine particulate of the disclosure.

The dispersing is a step of dispersing a solution containing a fluorine-containing monomer, a phase separation promoter, and a non-polymerizable solvent into water to provide a dispersion. Dispersing the solution forms droplets and the fluorine-containing monomer can be polymerized in these droplets. In this step, the phase separation promoter promotes phase separation and enables production of a hollow fine particulate having a large average particle size even though it contains a fluororesin.

The fluorine-containing monomer may be, but is not limited to, a fluorine-containing acrylic monomer, a fluorine-containing styrenic monomer, or a fluorine-containing olefin, and is preferably, for example, a monomer ($B^1$) represented by the following formula ($B^1$) :

$$CX^1X^2=CY^1Z \qquad (B^1)$$

wherein

$X^1$, $X^2$, and $Y^1$ are each independently H, $CH_3$, F, or Cl;
Z is

F,

a group represented by -Q-$Rf^1$-Y, wherein Q is a single bond, -O-, -O-(C=O)-, or -C(=O)-O-; $Rf^1$ is a C1-C20 fluorine-containing alkylene group optionally containing an ether bond between carbon atoms; and Y is F, H, -OH, -COOH, or -COOR, wherein R is a C1-C20 alkyl group,
a group represented by the following formula:

[Chem. 3]

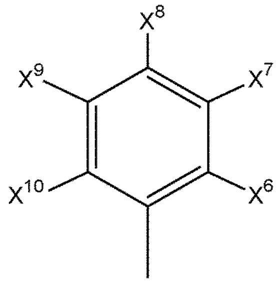

wherein $X^6$ to $X^{10}$ are each independently a hydrogen atom, a fluorine atom, or a C1-C8 hydrocarbon group optionally substituted with fluorine or chlorine, or
-$SO_3H$, and

any of $X^1$, $X^2$, $Y^1$, and Z contains one or more F atoms.

From the viewpoint of polymerizability, $X^1$ and $X^2$ are preferably each independently H, $CH_3$, or F, more preferably $X^1$ and $X^2$ are the same as each other and are F or H, still more preferably they are the same as each other and are H.
From the viewpoints of polymerizability and heat resistance of the polymer, $Y^1$ is preferably H, $CH_3$, or F, more preferably $CH_3$ or F, still more preferably $CH_3$.
Z is preferably F, a group represented by -Q-$Rf^1$-Y, or a group represented by the following formula.

[Chem. 4]

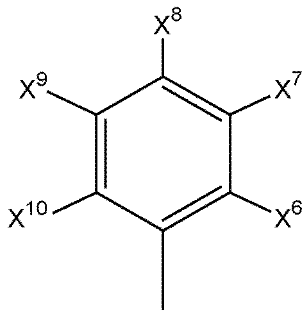

From the viewpoint of polymerizability, Z in the formula ($B^1$) is more preferably a group represented by -Q-$Rf^1$-Y, wherein Q is a single bond, -O-, -O-(C=O)-, or - C(=O)-O-.
From the viewpoint of easy synthesis of the monomer, Q is preferably a single bond, -O-(C=O)-, or -C(=O)-O-, more preferably -O-(C=O)- or -C(=O)-O-, still more preferably -C(=O)-O-.
From the viewpoints of heat resistance and electric properties of the polymer, $Rf^1$ preferably has a carbon number of 1 to 10, more preferably 1 to 6, still more preferably 1 to 4. $Rf^1$ is preferably a fluorine-containing alkylene group having no ether bond between carbon atoms, more preferably a group represented by -$CH_2$-$Rf^3$-$X^5$, wherein $Rf^3$ is a C1-C19 linear or branched fluorine-containing alkylene group; and $X^5$ is H or F. $Rf^3$ preferably has a carbon number of 1 to 9, more preferably 1 to 5, particularly preferably 1 to 3.
From the viewpoint of electric properties, Y is preferably F, H, or -COOR (wherein R is a C1-C20 alkyl group), more preferably H or F, still more preferably F.
The hydrocarbon group in $X^6$ to $X^{10}$ is preferably a non-fluorine alkyl group or a fluorine-containing alkyl group. The hydrocarbon group preferably has a carbon number of 1 to 6, more preferably 1 to 4.
The aforementioned fluorine-containing olefin preferably includes at least one selected from the group consisting of a functional group-containing fluorine-containing olefin (1), a functional group-free fluorine-containing olefin (2), and a fluorine-containing cyclic olefin (3).

(1) Functional group-containing fluorine-containing olefin

The functional group-containing fluorine-containing olefin (1) is preferably a monomer represented by the following formula (3):

[Chem. 5]

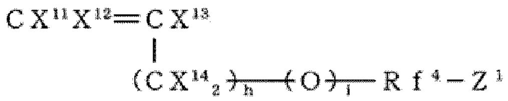

(3)

wherein $X^{11}$, $X^{12}$, and $X^{13}$ are the same as or different from each other and are each H or F; $X^{14}$ is H, F, or $CF_3$; h is an integer of 0 to 2; i is 0 or 1; $Rf^4$ is a C1-C40 fluorine-containing alkylene group or a C2-C100 fluorine containing alkylene group containing an ether bond; and $Z^1$ is a functional group selected from the group consisting of -OH, $CH_2OH$, -COOH, a carboxylic acid derivative, $-SO_3H$, a sulfonic acid derivative, an epoxy group, and a cyano group. More preferred among these is a monomer represented by $CH_2=CFCF_2ORf^4-Z^1$, wherein $Rf^4$ and $Z^1$ are defined as described above. More specifically, preferred are monomers represented by the formulas:

[Chem. 6]

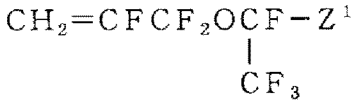 、 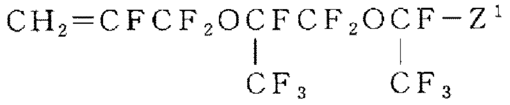 、

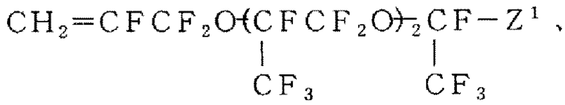 、 $CH_2=CFCF_2OCH_2CF_2-Z^1$ 、

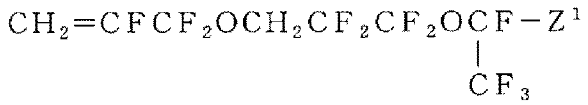 、

$CH_2=CFCF_2OCF_2CF_2OCF_2-Z^1$ 、

$CH_2=CFCF_2O(CF_2CF_2O)_2CF_2-Z^1$

wherein $Z^1$ is defined as described above.

A preferred example of the functional group-containing fluorine-containing olefin (1) is a monomer represented by $CF_2=CFORf^4-Z^1$ (wherein $Rf^4$ and $Z^1$ are defined as described above). More specific examples thereof include monomers represented by the formulas:

[Chem. 7]

$CF_2=CFOCF_2CF_2-Z^1$ 、 $CF_2=CFOCF_2CF_2CH_2-Z^1$ 、

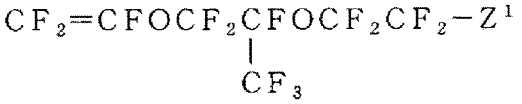

、

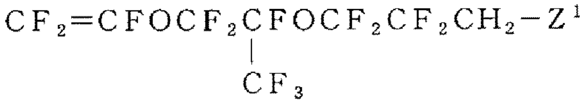

、

$CF_2=CFO(CF_2)_3Z^1$ 、 $CF_2=CFO(CF_2)_3CH_2-Z^1$ 、

$CF_2=CFOCF_2CF_2OCF_2-Z^1$、 $CF_2=CFOCF_2CF_2OCF_2CH_2-Z^1$、

$CF_2=CFOCF_2CF_2CH_2OCF_2CF_2-Z^1$ 、

$CF_2=CFOCF_2CF_2CH_2OCF_2CF_2CH_2-Z^1$

wherein $Z^1$ is defined as described above.

Other examples of the functional group-containing fluorine-containing olefin (1) include

[Chem. 8]

$CF_2=CFCF_2-O-Rf^4-Z^1$ 、 $CF_2=CF-Rf^4-Z^1$ 、

$CH_2=CH-Rf^4-Z^1$ 、 $CH_2=CHO-Rf^4-Z^1$

wherein $Rf^4$ and $Z^1$ are defined as described above.

More specific examples thereof include

[Chem, 9]

$CF_2=CFCF_2OCF_2CF_2CF_2-Z^1$、 $CF_2=CFCF_2OCF_2CF_2CF_2CH_2-Z^1$、

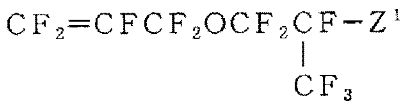

、

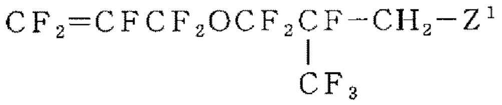

、

$CF_2=CFCF_2-Z^1$ 、 $CF_2=CFCF_2CH_2-Z^1$ 、

$CH_2=CHCF_2CF_2CH_2CH_2-Z^1$ 、 $CH_2=CHCF_2CF_2-Z^1$ 、

$CH_2=CHCF_2CF_2CH_2-Z^1$ 、 $CH_2=CHCF_2CF_2CF_2CF_2-Z^1$ 、

$CH_2=CHCF_2CF_2CF_2CF_2CH_2-Z^1$ 、 $CH_2=CHO-CH_2CF_2CF_2-Z^1$、

$CH_2=CHOCH_2CF_2CF_2CH_2-Z^1$

wherein $Z^1$ is defined as described above. Monomers containing a -OH group, a -COOH group, or a $-SO_3H$ group may cause poor electric properties and are therefore preferably present in an amount within the range that does not cause poor electric properties.

Preferred among the functional group-containing fluorine-containing olefins (1) are $CH_2=CF-CF_2-O-(CF(CF_3)-CF_2)_n-CF(CF_3)CH_2OH$ (wherein n = 0 to 9), $CH_2=CF-CF_2-O-(CF(CF_3)-CF_2)_n-CF(CF_3)COOH$ (wherein n = 0 to 9), $CH_2=CF-CF_2-O-(CF(CF_3)-CF_2)_n-CF(CF_3)CN$ (wherein n = 0 to 9), and $CF_2=CF-O-(CF_2CF(CF_3)O)_n-(CF_2)_m-Z^3$ (wherein $Z^3$ is COOH, $SO_3H$, or CN; m = 1 to 6; and n = 0 to 6).

(2) Functional group-free fluorine-containing olefin

The functional group-free fluorine-containing olefin (2) is preferred because it can lead to more improved electric properties. Selecting this monomer is also preferred because it enables control of the mechanical properties and glass transition temperature of the polymer.

The functional group-free fluorine-containing olefin (2) is preferably one represented by the formula (4):

[Chem. 10]

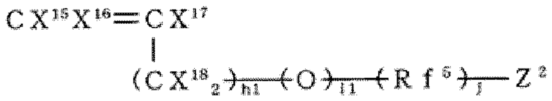

(4)

wherein $X^{15}$, $X^{16}$, and $X^{18}$ are the same as or different from each other and are each H or F; $X^{17}$ is H, F, or $CF_3$; h1, i1, and j are 0 or 1; $Z^2$ is H, F, or Cl; $Rf^5$ is a C1-C20 fluorine-containing alkylene group or a C2-C100 fluorine-containing alkylene group containing an ether bond.

Preferred specific examples thereof include monomers such as $CH_2=CH-(CF_2)_nF$ (wherein n = 1 to 10), $CH_2=CF-CF_2-O-(CF(CF_3)-CF_2)_n-CF(CF_3)H$ (wherein n = 0 to 9), and the following.

[Chem. 11]

$CF_2=CF_2$ 、 $CF_2=CH_2$ 、 $CF_2=CFCl$ 、 $CF_2=CFCF_3$ 、

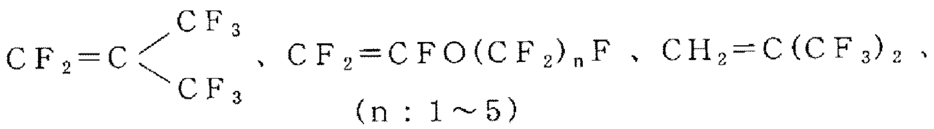

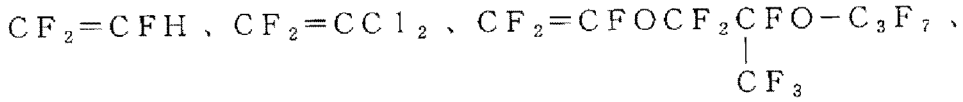

$CH_2=CF(CF_2)_nZ^2$ （$Z^2$は式（4）と同じ、n：1～10）、

$CH_2=CHOCH_2(CF_2)_nZ^2$ （$Z^2$は式（4）と同じ、n：1～10）、

$CH_2=CHOCH_2(CF_2)_nZ^2$ （$Z^2$は式（4）と同じ、n：1～10）

Preferred among these are $CF_2=CF_2$, $CF_2=CF-O-(CF_2)_nF$ (wherein n = 1 to 5), $CH_2=CF-CF_2-O-(CF(CF_3)-CF_2)_n-CF(CF_3)H$ (wherein n = 0 to 5), $CH_2=CH-(CF_2)_nF$ (wherein n = 1 to 6), $CF_2=CF-CF_3$, $CF_2=CFCl$, and $CF_2=CH_2$.

(3) Fluorine-containing cyclic olefin

The fluorine-containing cyclic olefin (3) is preferred because it can lead to more improved electric properties and to a fluorine-containing hollow fine particulate having a high glass transition temperature, which can lead to a much higher hardness. Examples of the fluorine-containing cyclic olefin (3) include an aliphatic cyclic structured monomer

(3-1) and a cyclopolymerizable diene monomer (3-2).

(3-1) Aliphatic cyclic structured monomer

The aliphatic cyclic structured monomer (3-1) is a monomer having an aliphatic cyclic structure in which at least one carbon atom defining the ring is a carbon atom defining a carbon-carbon unsaturated double bond. The aliphatic ring in the aliphatic cyclic structured monomer is preferably a ring containing an ether bond, more preferably a monomer containing no hydrogen atom bonded to a carbon atom. The aliphatic cyclic structured monomer is a monomer having a double bond between adjacent carbon atoms defining the ring (e.g., those represented by the following formulas (a), (c), and (a-1) to (a-5)) or a monomer having a double bond between a carbon atom defining the ring and a carbon atom outside the ring (e.g., those represented by the following formulas (a-6) and (a-7)).

[Chem. 12]

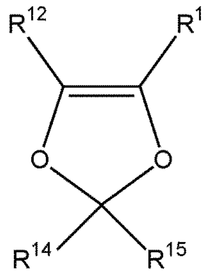

(a)

In the formula, $R^{12}$ to $R^{15}$ are each independently a fluorine atom, a C1-C5 perfluoroalkyl group, or a C1-C5 perfluoroalkoxy group.

[Chem. 13]

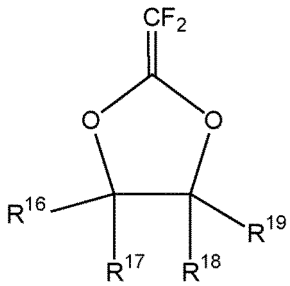

(c)

In the formula, $R^{16}$ to $R^{19}$ are each independently a fluorine atom, a C1-C5 perfluoroalkyl group, or a C1-C5 perfluoroalkoxy group.

[Chem. 14]

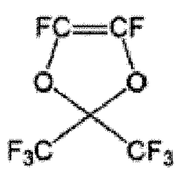

(a－1)

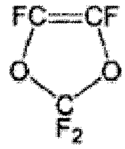

(a－2)

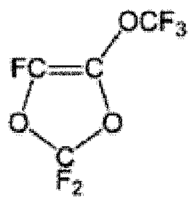

(a－3)

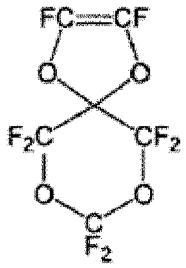

(a-4)

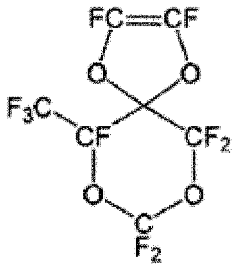

(a-5)

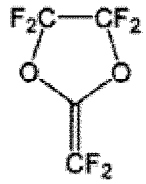

(a-6)

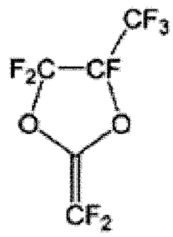

(a-7)

In particular, the aliphatic cyclic structured monomer (3-1) preferably includes at least one selected from the group consisting of the monomers represented by (a-1), (a-3), (a-6), and (a-7), and preferably includes at least one selected from the group consisting of monomers represented by (a-1), (a-3), and (a-7).

(3-2) Cyclopolymerizable diene monomer

The cyclopolymerizable diene monomer (3-2) is a diene-based fluorine-containing monomer that is cyclopolymerizable. An example thereof is a monomer represented by the following formula (b):

$CF_2$=CF-$Q^1$-CF=$CF_2$ (b)

wherein $Q^1$ is a C1-C5 (preferably C1-C3) linear or optionally branched perfluoroalkylene group optionally containing an ether bond and with any of the fluorine atoms being optionally replaced by a halogen atom other than a fluorine atom. Examples of the halogen atom other than fluorine include a chlorine atom and a bromine atom.

$Q^1$ is preferably a perfluoroalkylene group containing an ether bond. In this case, the ether bond in the perfluoroalkylene group may be present at one end of the group or may be present at both ends of the group, or may be present between carbon atoms of the group. In order to achieve excellent cyclopolymerizability, the ether bond is preferably present at one end of the group. Examples of the monomer represented by the formula (b) include perfluoro(3-butenyl vinyl ether), perfluoro(allyl vinyl ether), perfluoro(3,5-dioxaheptadiene), and perfluoro(3,5-dioxa-4,4-dimethylheptadiene). Particularly preferred is perfluoro(3-butenyl vinyl ether).

Examples of a unit formed by cyclopolymerization of the monomer represented by the formula (b) include those represented by the following formulas (II-1) to (II-4). As shown in the following formulas, in the formulas (II-1) to (II-3), four carbon atoms defining two double bonds define the main chain of the polymer, while in the formula (II-4), two end carbon atoms defining two double bonds alone define the main chain of the polymer. As in the formula (II-1), two carbon atoms among the four carbon atoms defining the two double bonds may define an aliphatic ring together with $Q^1$. As in the formulas (II-2) and (II-3), three double bonds may define an aliphatic ring together with $Q^1$. As in the formula (II-4), four double bonds may define an aliphatic ring together with $Q^1$. For the aliphatic ring containing $Q^1$, a 5- or 6-membered ring is easy to generate. A polymer generated by cyclopolymerization is a polymer in which a unit containing a 5- or 6-membered ring serves as a main unit.

[Chem. 15]

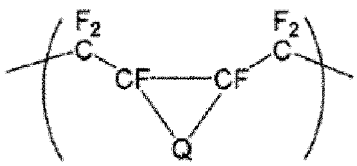

(II-1)

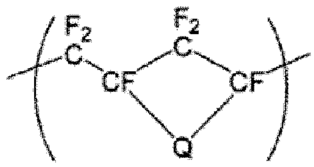

(II-2)

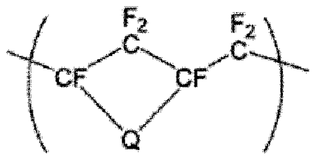

(II-3)

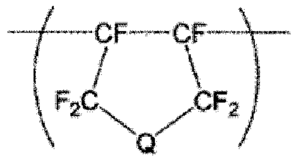

(II-4)

The fluorine-containing olefin preferably includes at least one selected from the group consisting of a functional group-containing fluorine-containing olefin (1), a functional group-free fluorine-containing olefin (2), and a fluorine-containing cyclic olefin (3), more preferably includes at least one selected from the group consisting of a functional group-free fluorine-containing olefin (2) and a fluorine-containing cyclic olefin (3), and is still more preferably a fluorine-containing cyclic olefin (3).

The fluorine-containing monomer is also preferably a fluorine-containing styrenic monomer represented by the following formula:

$$CX^1X^2=CY^1Z^1$$

wherein $X^1$, $X^2$, and $Y^1$ are each independently H, $CH_3$, F, or Cl; $Z^1$ is a group represented by the following formula:

[Chem. 16]

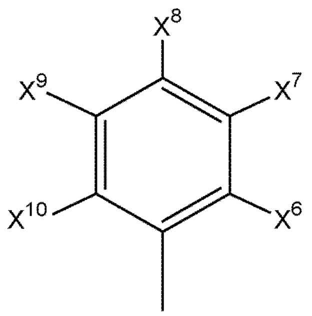

(wherein $X^6$ to $X^{10}$ are each independently a hydrogen atom, a fluorine atom, or a C1-C8 hydrocarbon group optionally substituted with fluorine or chlorine); and any of $X^1$, $X^2$, $Y^1$, and Z contains at least one F.

From the viewpoint of heat resistance, the C1-C8 hydrocarbon group optionally substituted with fluorine or chlorine is preferably a C1-C4 hydrocarbon group optionally substituted with fluorine, more preferably a C1-C2 hydrocarbon group optionally substituted with fluorine, most preferably $-CF_3$ or $CH_3$.

The fluorine-containing styrenic monomer preferably includes at least one selected from the group consisting of $CH_2=CH-C_6F_5$, $CF_2=CF-C_6H_5$, $CH_2=C(CH_3)-C_6F_5$, $CF_2=CF-C_6H_4-CH_3$, and $CF_2=CF-C_6H_4-CF_3$. More preferred among these is at least one selected from the group consisting of $CH_2=CH-C_6F_5$ and $CF_2=CF-C_6H_5$.

The fluorine-containing monomer preferably includes at least one selected from the group consisting of a fluorine-containing acrylic monomer, a fluorine-containing styrenic monomer, and a fluorine-containing olefin, and is more preferably a fluorine-containing acrylic monomer. For example, preferred is at least one selected from the group consisting of a fluoroalkyl acrylate, a fluoroalkyl methacrylate, a 2-fluorofluoroalkyl acrylate, and a 2-chlorofluoroalkyl acrylate.

The fluorine-containing monomer is more preferably a fluorine-containing acrylic monomer ($C^1$) represented by the following formula ($C^1$):

$$CH_2=CX^3-COORf^2 \qquad (C^1)$$

wherein $X^3$ is H, $CH_3$, F, Cl, or $CF_3$; and $Rf^2$ is a C1-C20 fluorine-containing alkyl group optionally containing an ether bond between carbon atoms.

$X^3$ is preferably H, $CH_3$, or F from the viewpoint of polymerizability, more preferably $CH_3$ or F from the viewpoint of heat resistance, and still more preferably $CH_3$ from the viewpoint of monomer stability.

From the viewpoints of electric properties and heat resistance, $Rf^2$ preferably has a carbon number of 1 to 10, more preferably 2 to 8, still more preferably 2 to 6.

Examples of the fluorine-containing acrylic monomer ($C^1$) include:

$CH_2=C(CH_3)COOCH_2CF_3$ (3FM),

$CH_2=C(CH_3)COOCH_2CF_2CF_2H$ (4FM),

$CH_2=C(CH_3)COOCH_2CF_2CF_3$ (5FM),

$CH_2=C(CH_3)COOCH_2CF_2CFHCF_3$ (6FM),

$CH_2=C(CH_3)COOCH_2(CF_2)_3CF_2H$ (8FM),

$CH_2=C(CH_3)COOCH_2CH_2(CF_2)_3CF_3$ (9FM),

$CH_2=C(CH_3)COOCH_2(CF_2)_5CF_2H$ (12FM),

$CH_2=C(CH_3)COOCH_2CH_2(CF_2)_5CF_3$ (13FM),

$CH_2=C(CH_3)COOCH (CF_3)_2$ (HFIP-MA),

$CH_2=C(CH_3)COOCH_2CCH_3(CF_3)_2$ (6FNP-M),

$CH_2=C(CH_3)COOCH_2CF(CF_3)OCF_2CF_2CF_3$ (6FOnO-MA),

and acrylates, 2-fluoroacrylates, and 2-chloroacrylates corresponding to these.

Examples of the 2-fluorofluoroalkyl acrylate include:

$CH_2=CFCOOCH_2CF_3$ (3FF)

$CH_2=CFCOOCH_2CF_2CF_2H$ (4FF),

$CH_2=CFCOOCH_2CF_2CF_3$ (5FF),

$CH_2=CFCOOCH_2(CF_2)_3CF_2H$ (8FF),

$CH_2=CFCOOCH_2CH_2(CF_2)_3CF_3$ (9FF),

$CH_2=CFCOOCH_2(CF_2)_5CF_2H$ (12FF),

$CH_2=CFCOOCH_2CH_2(CF_2)_5CF_3$ (13FF),

$CH_2=CFCOOCH(CF_3)_2$ (HFIP-F),

and

$CH_2=CFCOOCH_2CCH_3(CF_3)_2$ (6FNP-F) .

Examples of the 2-chlorofluoroalkyl acrylate include:

$CH_2=C(Cl)COOCH_2CH_2(CF_2)_3CF_3$ (9FCLA)

and

$CH_2=C(Cl)COOCH_2CH_2(CF_2)_5CF_3$ (13FCLA) .

Examples of the fluoroalkyl acrylate include:

$CH_2=CHCOOCH_2(CF_2)_3CF_2H$ (8FA),

$CH_2=CHCOOCH_2CH_2(CF_2)_3CF_3$ (9FA),

$CH_2=CHCOOCH_2(CF_2)_5CF_2H$ (12FA),

$CH_2=CHCOOCH_2CH_2(CF_2)_5CF_3$ (13FA),

$CH_2=CHCOOCH(CF_3)_2$ (HFIP-A),

and

$CH_2=CHCOOCH_2CCH_3(CF_3)_2$ (6FNP-A).

From the viewpoints of heat resistance and electric properties, the fluorine-containing monomer is preferably a fluorine-containing olefin, more preferably includes at least one selected from the group consisting of monomers represented by (a-1), (a-3), (a-6), and (a-7), still more preferably includes at least one selected from the group consisting of monomers represented by (a-1), (a-3), and (a-7) .

The fluorine-containing monomer preferably has a fluorine content of 30% by mass or higher. The production method of the disclosure can provide a hollow fine particulate having a large average particle size even when a fluorine-containing monomer having a fluorine content of 30% by mass or higher is used. The fluorine content of the fluorine-containing monomer is more preferably 40% by mass or more, still more preferably 50% by mass or more. Although the upper limit of the fluorine content is not limited, the fluorine content may be 80% by mass, and is preferably 75% by mass or less, more preferably 70% by mass or less.

In particular, the fluorine-containing monomer preferably includes at least one selected from the group consisting of 3FM, 5FM, 13FM, HFIP-A, HFIP-MA, HFIP-F, 3FF, 5FF, 13FF, 6FNP-A, 6FNP-M, and 6FNP-F, more preferably includes at least one selected from the group consisting of 3FM, 5FM, 13FM, 3FF, 5FF, 13FF, HFIP-MA, HFIP-F, and HFIP-A.

The solution containing a fluorine-containing monomer, a phase separation promoter, and a non-polymerizable solvent preferably further contains a monomer copolymerizable with the fluorine-containing monomer.

Examples of the monomer copolymerizable with the fluorine-containing monomer include a crosslinkable monomer and a fluorine-free monomer other than the crosslinkable monomer.

Examples of the crosslinkable monomer include a multifunctional monomer containing two or more (in particular 2 to 4) polymerizable reactive groups, in particular polymerizable double bonds. The presence of a multifunctional monomer allows the resulting hollow fine particulate to have improved strength. The solution preferably further contains a crosslinkable monomer.

Examples of the multifunctional monomer include di(meth)acrylates such as ethylene glycol di(meth)acrylate, diethylene glycol di(meth)acrylate, triethylene glycol di(meth)acrylate, 1,6-hexanediol di(meth)acrylate, and trimethylolpropane di(meth)acrylate; tri(meth)acrylates such as trimethylolpropane tri(meth)acrylate, ethylene oxide-modified trimethylolpropane tri(meth)acrylate, and pentaerythritol tri(meth)acrylate; diallyl compounds or triallyl compounds such as pentaerythritol tetra(meth)acrylate, dipentaerythritol hexa(meth)acrylate, diallyl phthalate, diallyl maleate, diallyl fumarate, diallyl succinate, and triallyl isocyanurate; and divinyl compounds such as divinylbenzene and butadiene.

Preferred among these is at least one selected from the group consisting of a di(meth)acrylate, a tri(meth)acrylate, and a divinyl compound, and preferred is at least one selected from the group consisting of ethylene glycol di(meth)acrylate, trimethylolpropane tri(meth)acrylate, and divinylbenzene. One of these may be used alone or two or more of these may be used in the form of mixture.

A fluorine-containing multifunctional acrylate monomer obtained by replacing part of the multifunctional acrylate monomer with fluorine is also preferred because it can lead to improved electric properties. Examples of this fluorine-containing multifunctional acrylate monomer include di-$\alpha$-fluoroacrylates such as ethylene glycol di-$\alpha$-fluoroacrylate, diethylene glycol di-$\alpha$-fluoroacrylate, triethylene glycol di-$\alpha$-fluoroacrylate, 1,6-hexanediol di-$\alpha$-fluoroacrylate, and trimethylolpropane di-$\alpha$-fluoroacrylate; tri-$\alpha$-fluoroacrylates such as trimethylolpropane tri-$\alpha$-fluoroacrylate, ethylene oxide-modified trimethylolpropane tri-$\alpha$-fluoroacrylate, and pentaerythritol tri-$\alpha$-fluoroacrylate; pentaerythritol tetra-$\alpha$-fluoroacrylate, dipentaerythritol hexa-$\alpha$-fluoroacrylate, $CH_2=CX-COO-CH_2(CF_2CF_2)_nCH_2-OCO-CX=CH_2$ (wherein X is H, $CH_3$, F, or Cl; and n = 1 to 10), $CH_2=CX-COO-CH_2CF(CF_3)-O-(CF_2CF(CF_3)O)_nCF(CF_3)CH_2-OCO-CX=CH_2$ (wherein X is H, $CH_3$, F, or Cl; and n = 1 to 20). Examples also include $CF_2=CF-O-(CF_2)_n-O-CF=CF_2$ (wherein n = 1 to 20), $CF_2=CF-(O-CF_2CF(CF_3))_n-O-CF=CF_2$ (wherein n = 1 to 20), and $CF_2=CF-(CF_2)_n-CF=CF_2$ (wherein n = 1 to 20) .

Examples of the fluorine-free monomer other than the crosslinkable monomer include, but are not limited to, a monofunctional monomer that does not contain a fluorine atom but contains one polymerizable reactive group.

Examples of the monofunctional monomer include alkyl (meth)acrylates such as methyl (meth)acrylate, ethyl

(meth)acrylate, propyl (meth)acrylate, butyl (meth)acrylate, cumyl (meth)acrylate, cyclohexyl (meth)acrylate, myristyl (meth)acrylate, palmityl (meth)acrylate, stearyl (meth)acrylate, lauryl (meth)acrylate, and isobornyl (meth)acrylate; polar group-containing (meth)acrylic monomers such as (meth)acrylonitrile, (meth)acrylamide, (meth)acrylic acid, glycidyl (meth)acrylate, 2-hydroxyethyl methacrylate, and 2-hydroxypropyl methacrylate; aromatic vinyl monomers such as styrene, $\alpha$-methylstyrene, p-methylstyrene, and p-chlorostyrene; vinyl esters such as vinyl acetate, vinyl benzoate, vinyl ester of neononanoic acid (trade name VeoVa 9), vinyl ester of neodecanoic acid (trade name VeoVa 10), and vinyl propionate; vinyl ethers such as methyl vinyl ether, ethyl vinyl ether, butyl vinyl ether, and hydroxybutyl vinyl ether; halogen-containing monomers such as vinyl chloride and vinylidene chloride; vinylpyridine, 2-acryloyloxyethyl phthalic acid, itaconic acid, fumaric acid, ethylene, propylene, and a polydimethylsiloxane macromonomer. Preferred among these is at least one selected from the group consisting of methyl methacrylate, 2-hydroxyethyl methacrylate, cyclohexyl methacrylate, and isobornyl methacrylate from the viewpoints of miscibility with a fluorine-containing monomer and an increase in Tg.

The solution contains the monomer(s) in an amount of preferably 0.1 to 10 parts by mass, more preferably 0.5 to 5 parts by mass, still more preferably 0.8 to 3.5 parts by mass, relative to 1 part by mass of the non-polymerizable solvent.

In the case where a fluorine-containing monomer alone is polymerized, the amount of the monomer(s) contained means the amount of the fluorine-containing monomer used. In the case where a fluorine-containing monomer and a monomer copolymerizable with the fluorine-containing monomer are polymerized, the amount of the monomer(s) contained means the sum of the amounts of the fluorine-containing monomer and the monomer copolymerizable with the fluorine-containing monomer.

The proportions of the fluorine-containing monomer and the monomer copolymerizable with the fluorine-containing monomer (crosslinkable monomer and fluorine-free monomer) in the solution are set as appropriate in accordance with the target fluorine-containing resin.

The phase separation promoter may be any one capable of promoting phase separation in the polymerizing, and is preferably a polymer and preferably has a weight average molecular weight of 3000 or higher.

The weight average molecular weight can be determined similarly to the PS-equivalent weight average molecular weight in GPC measurement.

The phase separation promoter is preferably a compound that is dissolvable in a non-polymerizable solvent at room temperature (e.g., 25°C) and that satisfies the relationship of the following formula:

$$|SA - SB| < 3\ (J/cm^3)^{1/2}$$

wherein SA represents the Sp value $(J/cm^3)^{1/2}$ of the phase separation promoter and SB represents the Sp value $(J/cm^3)^{1/2}$ of the non-polymerizable solvent. The phase separation promoter more preferably has a |SA - SB| value of smaller than 2, still more preferably smaller than 1.

Examples of the phase separation promoter include an aromatic vinyl polymer, a polyalkyl (meth)acrylate, a vinyl chloride polymer, polyvinyl acetate, and polyester.

Examples of the aromatic vinyl polymer include polystyrene, divinyl benzene, and acrylonitrile-styrene resin. Preferred among these is polystyrene.

Examples of the polyalkyl (meth)acrylate include polymethyl methacrylate, polybutyl methacrylate, and polyethyl methacrylate. Preferred among these is polymethyl methacrylate.

From the viewpoints of solubility and hydrophobicity, the phase separation promoter is preferably a polymer containing a polymerized unit based on a monomer represented by the following formula:

$$CH_2=CX^4Y^2$$

wherein $X^4$ is H, $CH_3$, F, Cl, or $CF_3$; and $Y^2$ is Cl, $C_6H_4R^1$, $C_6H_3R^2R^3$, $COOR^4$, or $OCOR^5$, wherein $R^1$, $R^2$, $R^3$, $R^4$, and $R^5$ are each independently H, OH, or a C1-C40 alkyl group optionally substituted with a halogen atom.

The solution contains the phase separation promoter preferably in an amount of 0.01 to 0.5 parts by mass, more preferably 0.02 to 0.3 parts by mass, still more preferably 0.05 to 0.2 parts by mass, relative to 1 part by mass of the non-polymerizable solvent.

The solution preferably further contains an initiator. The initiator may be added to the solution before the dispersing or may be added to the dispersion after the dispersing and before the polymerizing.

The initiator may be an oil-soluble initiator, which initiates polymerization of a fluorine-containing monomer (or a fluorine-containing monomer and a monomer copolymerizable with the fluorine-containing monomer) in droplets formed by dispersing the solution in water, and those conventionally used may be used.

Examples thereof include those soluble in the monomer, including azo compounds such as azobisisobutyronitrile, 2,2'-azobis(2-methylbutyronitrile), 2,2'-azobis(4-methoxy-2,4-dimethylvaleronitrile), and 2,2'-azobis(N-butyl-2-methylpropionamide), and peroxides such as cumene hydroperoxide, t-butyl hydroperoxide, dicumyl peroxide, di-t-butyl peroxide, benzoyl peroxide, and lauroyl peroxide, which are radical polymerization initiators. A photopolymerization initiator that initiates polymerization by light such as ultraviolet rays may also be used. The photopolymerization initiator may be, but is not limited to, one conventionally used.

The initiator preferably includes at least one selected from the group consisting of azo compounds, and is preferably an azo compound. In particular, preferred is at least one selected from the group consisting of 2,2-azobis(4-methoxy-2,4-dimethylvaleronitrile) and azobisisobutyronitrile, more preferred is 2,2-azobis(4-methoxy-2,4-dimethylvaleronitrile).

The non-polymerizable solvent used may be a solvent that can dissolve a fluorine-containing monomer and a phase separation promoter, as well as an optional components such as a monomer copolymerizable with the fluorine-containing monomer and an initiator and that has low miscibility with the resulting fluorine-containing resin. Low miscibility with the resulting fluorine-containing resin can promote phase separation of the resulting fluorine-containing resin, which enables production of a hollow fine particulate.

The non-polymerizable solvent is more preferably a solvent that can dissolve a fluorine-containing monomer and a phase separation promoter, as well as an optional components such as a monomer copolymerizable with the fluorine-containing monomer and an initiator and that does not dissolve the resulting fluorine-containing resin.

The non-polymerizable solvent used may be a solvent that has a feature of low miscibility with the fluorine-containing resin and that satisfies the relationship $\gamma^X \geq \gamma^P$, wherein $\gamma^X$ represents the interfacial tension between the non-polymerizable solvent and water, and $\gamma^P$ represents the interfacial tension (mN/m) between water and a surface that adsorbs a polymer obtained by polymerization using a solution prepared by dissolving a fluorine-containing monomer (and an optional monomer copolymerizable with the fluorine-containing monomer) in the non-polymerizable solvent under the conditions of the production method of the disclosure.

The non-polymerizable solvent is preferably, for example, one that is in the form of liquid at the polymerization temperature of the monomer(s) (a fluorine-containing monomer, or a fluorine-containing monomer and a monomer copolymerizable with the fluorine-containing monomer), that is mixable with the monomer(s), that is unreactive with the monomer(s), and that is easily evaporated by heating, and preferably includes at least one selected from the group consisting of an aromatic hydrocarbon, an ester, and a saturated hydrocarbon or halogen-substituted product thereof.

Examples of the saturated hydrocarbon or halogen-substituted product thereof include butane, pentane, hexane, hexadecane, cyclohexane, decane, methyl chloride, methylene chloride, chloroform, carbon tetrachloride, bromonaphthalene, and dichloromethane.

Examples of the aromatic hydrocarbon include toluene, xylene, benzene, and chlorobenzene.

Examples of the ester include ethyl acetate and butyl acetate.

As long as it has low miscibility with the fluorine-containing resin, a fluorine-containing solvent is also preferred such as a fluorine-containing alkane, a fluorine-containing haloalkane, a fluorine-containing aromatic compound, or a fluorine-containing ether (e.g., hydrofluoroether (HFE)). Preferred are, for example, perfluorohexane, 1,3-trifluoromethylbenzene, perfluorotriheptylamine, and perfluorotributylamine.

Alternatively, the fluorine-containing solvent preferably includes at least one selected from the group consisting of a perfluoro aromatic compound, a perfluorotrialkylamine, a perfluoroalkane, a hydrofluorocarbon, a perfluoro cyclic ether, and a hydrofluoroether. These fluorine-containing solvents are particularly preferred in the case of using a fluorine-containing olefin, in particular PF-MMD.

The perfluoro aromatic compound is, for example, a perfluoro aromatic compound optionally containing one or more perfluoroalkyl groups. The aromatic ring of the perfluoro aromatic compound may include at least one ring selected from the group consisting of a benzene ring, a naphthalene ring, and an anthracene ring. The perfluoro aromatic compound may contain one or more (e.g., one, two, or three) aromatic rings. The perfluoroalkyl group as a substituent may be, for example, a C1-C6, C1-C5, or C1-C4 linear or branched perfluoroalkyl group, and is preferably a C1-C3 linear or branched perfluoroalkyl group. The number of substituents may be, for example, 1 to 4, preferably 1 to 3, more preferably 1 or 2. In the case where multiple substituents are present, they may be the same as or different from each other. Examples of the perfluoro aromatic compound include perfluorobenzene, perfluorotoluene, perfluoroxylene, and perfluoronaphthalene. Preferred examples of the perfluoro aromatic compound include perfluorobenzene and perfluorotoluene.

The perfluorotrialkylamine may be, for example, an amine substituted with three linear or branched perfluoroalkyl groups. The perfluoroalkyl group may have a carbon number of, for example, 1 to 10, preferably 1 to 5, more preferably 1 to 4. The perfluoroalkyl groups may be the same as or different from each other, and are preferably the same as each other. Examples of the perfluorotrialkylamine include perfluorotrimethylamine, perfluorotriethylamine, perfluorotripropylamine, perfluorotriisopropylamine, perfluorotributylamine, perfluoro tri-sec-butylamine, perfluoro tri-tert-butylamine, perfluorotripentylamine, perfluorotriisopentylamine, and perfluorotrineopentylamine. Preferred is perfluorotripropylamine or perfluorotributylamine.

The perfluoroalkane may be, for example, a C3-C12 (preferably C3-C10, more preferably C3-C6) linear,

branched, or cyclic perfluoroalkane. Examples of the perfluoroalkane include perfluoropentane, perfluoro-2-methylpentane, perfluorohexane, perfluoro-2-methyl hexane, perfluoroheptane, perfluorooctane, perfluorononane, perfluorodecane, perfluorocyclohexane, perfluoro(methylcyclohexane), perfluoro(dimethylcyclohexane) (e.g., perfluoro(1,3-dimethylcyclohexane)), and perfluorodecalin. Preferred is perfluoropentane, perfluorohexane, perfluoroheptane, or perfluorooctane.

The hydrofluorocarbon may be, for example, a C3-C8 hydrofluorocarbon. Examples of the hydrofluorocarbon include $CF_3CH_2CF_2H$, $CF_3CH_2CF_2CH_3$, $CF_3CHFCHFC_2F_5$, 1, 1, 2, 2, 3, 3, 4-heptafluorocyclopentane, $CF_3CF_2CF_2CF_2CH_2CH_3$, $CF_3CF_2CF_2CF_2CF_2CHF_2$, and $CF_3CF_2CF_2CF_2CF_2CF_2CH_2CH_3$. Preferred is $CF_3CH_2CF_2H$ or $CF_3CH_2CF_2CH_3$.

The perfluoro cyclic ether may be, for example, a perfluoro cyclic ether optionally containing one or more perfluoroalkyl groups. The ring of the perfluoro cyclic ether may be a 3- to 6-membered ring. The ring of the perfluoro cyclic ether may optionally contain one or more oxygen atoms as ring-constituting atoms. The ring preferably contains one or two oxygen atoms, more preferably one oxygen atom. The perfluoroalkyl group as a substituent may be, for example, a C1-C6, C1-C5, or C1-C4 linear or branched perfluoroalkyl group. A preferred perfluoroalkyl group is a C1-C3 linear or branched perfluoroalkyl group. The number of substituents may be, for example, 1 to 4, preferably 1 to 3, more preferably 1 or 2. In the case where multiple substituents are present, they may be the same as or different from each other. Examples of the perfluoro cyclic ether include perfluorotetrahydrofuran, perfluoro-5-methyltetrahydrofuran, perfluoro-5-ethyltetrahydrofuran, perfluoro-5-propyltetrahydrofuran, perfluoro-5-butyltetrahydrofuran, and perfluorotetrahydropyran. Preferred examples of the perfluoro cyclic ether include perfluoro-5-ethyltetrahydrofuran and perfluoro-5-butyltetrahydrofuran.

The hydrofluoroether may be, for example, a fluorine-containing ether. The hydrofluoroether preferably has a global warming potential (GWP) of 400 or lower, more preferably 300 or lower. Examples of the hydrofluoroether include $CF_3CF_2CF_2CF_2OCH_3$, $CF_3CF_2CF(CF_3)OCH_3$, $CF_3CF(CF_3)CF_2OCH_3$, $CF_3CF_2CF_2CF_2OC_2H_5$, $CF_3CH_2OCF_2CHF_2$, $C_2F_5CF(OCH_3)C_3F_7$, trifluoromethyl 1,2,2,2-tetrafluoroethyl ether (HFE-227me), difluoromethyl 1,1,2,2,2-pentafluoroethyl ether (HFE-227mc), trifluoromethyl 1,1,2,2-tetrafluoroethyl ether (HFE-227pc), difluoromethyl 2,2,2-trifluoroethyl ether (HFE-245mf), and 2,2-difluoroethyl trifluoromethyl ether (HFE-245pf). The hydrofluoroether is preferably $CF_3CH_2OCF_2CHF_2$, $C_2F_5CF(OCH_3)C_3F_7$, or a compound represented by the following formula (D1):

$$R^{21}\text{-O-}R^{22} \qquad (D1)$$

(wherein $R^{21}$ is linear or branched perfluorobutyl; and $R^{22}$ is methyl or ethyl) such as $CF_3CF_2CF_2CF_2OCH_3$ or $CF_3CF_2CF_2CF_2OC_2H_5$, more preferably a compound represented by the formula (D1).

In order to produce a hollow fine particulate having a monoporous structure, the non-polymerizable solvent more preferably includes at least one selected from the group consisting of an aromatic hydrocarbon, an ester, and a C8-C18 saturated hydrocarbon or halogen-substituted product thereof, still more preferably at least one selected from the group consisting of toluene and xylene, and is particularly preferably toluene.

The production method of the disclosure can provide both a monoporous structure and a multiporous structure in accordance with the type of the non-polymerizable solvent. The reason why a multiporous structure is formed or a monoporous structure is formed is not clear. Still, with regard to the combination of a fluorine-containing resin obtained and a solvent, a monoporous structure is formed in a completely non-miscible system while a multiporous structure is formed in a slightly miscible system.

The completely non-miscible system refers to any system in which a fluorine-containing resin obtained shows no visually observable swelling after it is placed in a non-polymerizable solvent at a concentration of 5% by mass and at the polymerization temperature for six hours. For example, use of a saturated hydrocarbon as a non-polymerizable solvent can provide a hollow fine particulate having a monoporous structure.

The non-polymerizable solvent may be used in an amount selected as appropriate within a wide range, and is commonly 0.1 to 10 parts by mass, preferably 0.5 to 5 parts by mass, relative to 1 part by mass of the monomer(s) (i.e., a fluorine-containing monomer, or a fluorine-containing monomer and a monomer copolymerizable with the fluorine-containing monomer).

The solution preferably further contains a dispersion stabilizer. The presence of a dispersion stabilizer can further promote phase separation and lead to a hollow fine particulate having a large particle size.

The dispersion stabilizer used may be selected from a wide range of those having an effect of preventing aggregation of droplets formed by dispersing in water a solution containing a monomer component, a phase separation promoter, and a non-polymerizable solvent.

Examples thereof include high molecular weight dispersion stabilizers such as polyvinyl alcohol, methyl cellulose, ethyl cellulose, polyacrylic acid, polyacrylimide, polyethylene oxide, and a poly(hydroxystearic acid-g-methyl methacrylate-co-methacrylic acid) copolymer, nonionic surfactants, anionic surfactants, and amphoteric surfactants. Preferred among these are high molecular weight dispersion stabilizers such as polyvinyl alcohol. A fluorine-containing anionic

surfactant, for example, may also be used.

The dispersion stabilizer is contained in an amount of preferably 0.005 to 1 part by mass, more preferably 0.01 to 0.1 parts by mass, relative to 1 part by mass of the solution.

The dispersing is a step of dispersing in water a solution containing a fluorine-containing monomer, a phase separation promoter, and a non-polymerizable solvent, as well as optional components such as a monomer copolymerizable with the fluorine-containing monomer, an initiator, and a dispersion stabilizer.

The dispersing may be performed by, for example, a variety of known methods such as dispersing by mechanical shearing force using a homogenizer or employing membrane emulsification. The dispersing may be performed under a temperature condition of 0°C or higher and lower than 100°C, preferably 0°C to 90°C. In the case where the solution in the dispersing contains an initiator, the temperature needs to be not higher than the temperature that affects decomposition of the initiator used, and is typically around room temperature or lower, particularly preferably about 0°C to about 30°C.

In the above dispersion methods, droplets formed by dispersion of the solution are not monodispersed but are commonly in the form of mixture of droplets having various, different particle sizes. Thus, particles of a hollow fine particulate finally obtained also have different particle sizes.

Alternatively, a dispersion method may be selected so as to achieve droplets of a uniform size and provide monodispersed droplets. An exemplary method for forming such monodispersed droplets is a method of producing monodispersed droplets by membrane emulsification using porous glass (SPG). In the case of producing such monodispersed droplets having a uniform particle size, particles of a hollow fine particulate finally obtained are also monodispersed with a uniform particle size.

In either case, the average particle size of the droplets is determined as appropriate in accordance with a desired average particle size of the hollow fine particulate.

The dispersing also preferably includes a dispersing step A in which the solution is dispersed in water at a temperature of 50°C or higher (preferably 55°C or higher, more preferably 60°C or higher, still more preferably 65°C or higher) to provide a dispersion or a dispersing step B in which the solution is dispersed in water at a temperature of lower than 50°C to provide a dispersion and the dispersion obtained is heated to 50°C or higher (preferably 55°C or higher, more preferably 60°C or higher, still more preferably 65°C or higher). These steps each enable efficient progress of polymerization without phase separation of the dispersion even when the fluorine-containing monomer has a high fluorine content.

The production method of the disclosure preferably further includes adding an oil-soluble initiator to the dispersion after the dispersing and before the polymerizing. In the case where the dispersing is performed at a relatively high temperature (e.g., 50°C or higher) as described above and the solution is combined with an initiator in advance, polymerization may undesirably start in the dispersing. Thus, further adding a initiator to the dispersion after the dispersing and before the polymerizing allows the dispersing to be performed at a relatively high temperature.

The polymerizing may be any step in which at least a fluorine-containing monomer is polymerized. A fluorine-containing monomer alone may be polymerized, or a fluorine-containing monomer and a monomer copolymerizable with the fluorine-containing monomer may be polymerized.

The polymerizing may be performed in conformity with a conventionally known polymerization method such as microemulsion polymerization, mini-emulsion polymerization, or micro-suspension polymerization. Polymerization in the polymerizing may also be suspension polymerization. Suspension polymerization of the dispersion of the solution can be performed by heating the dispersion under stirring.

The polymerization temperature may be any temperature enough to initiate polymerization of the fluorine-containing monomer (and an optional monomer copolymerizable with the fluorine-containing monomer) by an initiator, and is commonly 10°C to 90°C, particularly preferably 30°C to 80°C.

The polymerization is performed until a desired hollow fine particulate is obtained. The duration of polymerization varies in accordance with factors such as the types of a fluorine-containing monomer (and an optional monomer copolymerizable with the fluorine-containing monomer), a polymerization initiator, and a non-polymerizable solvent used, and is commonly about 3 to 24 hours.

The polymerization is preferably performed in an atmosphere of inert gas such as nitrogen gas or argon.

Polymerization as performed above enables polymerization of a fluorine-containing monomer (or a fluorine-containing monomer and a monomer copolymerizable with the fluorine-containing monomer) in droplets of a solution containing the fluorine-containing monomer (or the fluorine-containing monomer and the monomer copolymerizable with the fluorine-containing monomer), a phase separation promoter, and a non-polymerizable solvent.

The presence of the phase separation promoter and the non-polymerizable solvent promotes phase separation of the resulting polymer, which results in formation of a monolayer structured shell, i.e., a shell containing a fluorine-containing resin containing a polymerized unit based on the fluorine-containing monomer (or a polymerized unit based on the fluorine-containing monomer and a polymerized unit based on the monomer copolymerizable with the fluorine-containing monomer). On the other hand, the core in the form of hollow contains the non-polymerizable solvent therein.

The hollow fine particulate thus obtained in the form of dispersion may be used as it is. Alternatively, the dispersion may be filtered, optionally followed by washing with water, whereby the hollow fine particulate in the form of powder may be used in a variety of applications.

The hollow fine particulate in the form of dispersion or powder may be subjected to removal of the non-polymerizable solvent, which may be then used in a variety of applications. Thus, the method for producing a hollow fine particulate of the disclosure preferably includes removing the non-polymerizable solvent from the hollow fine particulate obtained.

The removing may be performed by any method capable of removing the non-polymerizable solvent present in a hollow portion. Examples thereof include a method of heating the hollow fine particulate containing the non-polymerizable solvent inside a hollow portion, a method of causing natural evaporation of the non-polymerizable solvent, and decompression. From the viewpoints of easiness and economic efficiency, heating removal is preferred. The heating temperature may be set as appropriate in accordance with factors such as the non-polymerizable solvent. Preferred is heating at a temperature of 20°C to 300°C and at a pressure of about 1 to about 100000 Pa.

In the disclosure, the "hollow" of the hollow fine particulate means not only the case where the air exists in a hollow portion but also the case where a component such as the non-polymerizable solvent exists in a hollow portion.

The above structure allows the production method of the disclosure to produce a hollow fine particulate having an average particle size of 1.0 μm or greater. The average particle size of the hollow fine particulate is preferably 1.0 μm or greater, more preferably 2.0 μm or greater, still more preferably 5.0 μm or greater. From the viewpoint of stability of the particulate, the average particle size is preferably 50.0 μm or smaller, more preferably 30.0 μm or smaller.

The average particle size may be determined by dynamic light scattering (DLS). Alternatively, the average particle size may be calculated from an optical micrograph using particle size analyzing software LUZEX AP. In this case, preferably, multiple pictures are taken such that they include 50 or more particles in total for analysis.

The production method of the disclosure can produce the hollow fine particulate of the disclosure to be described below.

The hollow fine particulate of the disclosure contains a fluorine-containing resin D containing a polymerized unit based on a fluorine-containing monomer and has an average particle size of 1.0 μm or greater. The hollow fine particulate of the disclosure may have what is called a nesting structure, but preferably has a monoporous structure including a shell containing the fluorine-containing resin D and a hollow portion.

The "monoporous structure" as used herein does not encompass structures having multiple pores, such as a multiporous structure, but refers to structures having a single, closed pore. In the following description, the portion other than the pore of the hollow fine particulate is referred to as a "shell".

The particle size of the hollow fine particulate of the disclosure can be adjusted by changing the sizes of the droplets in the aforementioned production method. Conventional methods have difficulty in providing an increased average particle size for a hollow fine particulate containing a fluorine-containing resin.

The aforementioned production method of the disclosure allows a hollow fine particulate containing a fluorine-containing resin to have an increased average particle size, and thus can produce a hollow fine particulate having an average particle size of 1.0 μm or greater.

The hollow fine particulate of the disclosure preferably has an average particle size of 1.0 μm or greater, more preferably 2.0 μm or greater, still more preferably 5.0 μm or greater. The average particle size is preferably 50.0 μm or smaller, more preferably 40.0 μm or smaller, still more preferably 30.0 μm or smaller.

The average particle size may be determined by dynamic light scattering (DLS). Alternatively, the average particle size may be calculated from an optical micrograph using particle size analyzing software LUZEX AP. In this case, preferably, multiple pictures are taken such that they include 50 or more particles in total for analysis.

Preferably, the hollow fine particulate of the disclosure includes a shell containing the fluorine-containing resin D and a hollow portion and has a monoporous structure, and the hollow portion has a pore size of 66 to 95% of the diameter of the hollow fine particulate. The pore size of the hollow portion is more preferably 66% or greater, still more preferably 74% or greater, particularly preferably 79% or greater, while preferably 95% or smaller, more preferably 93% or smaller, still more preferably 90% or smaller, particularly preferably 88% or smaller, of the diameter of the hollow fine particulate.

The pore size of the hollow portion can be calculated by image analysis on a TEM image of the hollow fine particulate using particle size analyzing software LUZEX AP. Specifically, about 200 particles of the hollow fine particulate in the TEM image are randomly extracted and the inner radius (R1) of each particle is measured. Thereby, the pore size of the hollow portion can be calculated by the following formula.

$$\text{Pore size of hollow portion} = R1 \times 2$$

For the hollow fine particulate of the disclosure, the percentage of the thickness of the shell relative to the

diameter of the hollow fine particulate is preferably 17% or lower. The percentage is more preferably 13% or lower, still more preferably 10% or lower, particularly preferably 9% or lower. A small shell thickness can lead to a high porosity, resulting in a hollow fine particulate having a lower permittivity.

From the viewpoint of strength of the hollow fine particulate, the percentage is preferably 4% or higher, more preferably 6% or higher.

The thickness of the shell can be calculated by image analysis on a TEM image of the hollow fine particulate using particle size analyzing software LUZEX AP. Specifically, about 200 particles of the hollow fine particulate in the TEM image are randomly extracted, and the inner radius (R1) and outer radius (R2) of each particle are measured. Thereby, the thickness of the shell can be calculated by the following formula.

$$\text{Shell thickness} = R2 - R1$$

The hollow fine particulate of the disclosure preferably has a porosity of 30% by volume or higher. The porosity is more preferably 40% by volume or higher, still more preferably 50% by volume or higher, particularly preferably 55% by volume or higher. A hollow fine particulate having a high porosity can have a low relative permittivity and is suitable for the use as an electronic material. From the viewpoint of strength of the hollow fine particulate, the upper limit of the porosity is preferably, but is not limited to, 80% by volume or lower, more preferably 70% by volume or lower.

The porosity can be calculated by image analysis on a TEM image of the hollow fine particulate using particle size analyzing software LUZEX AP. Specifically, about 200 particles of the hollow fine particulate in the TEM image are randomly extracted, and the inner radius (R1) and outer radius (R2) of each particle are measured. Thereby, the porosity can be calculated by the following formula.

$$\text{Porosity (\%)} = (R1/R2)^3 \times 100$$

The hollow fine particulate of the disclosure preferably has a refractive index of 1.40 or lower. The refractive index is more preferably 1.35 or lower, still more preferably 1.30 or lower, particularly preferably 1.25 or lower. The lower limit of the refractive index may be, but is not limited to, 1.10 or higher, for example.

The refractive index is a value determined by the immersion method.

The fluorine-containing resin D may consist only of a polymerized unit based on a fluorine-containing monomer, or may contain a polymerized unit based on a fluorine-containing monomer and a polymerized unit based on a monomer copolymerizable with the fluorine-containing monomer.

Examples of the monomer copolymerizable with the fluorine-containing monomer include the aforementioned crosslinkable monomers and fluorine-free monomers other than the crosslinkable monomers.

In order to strengthen the shell of the hollow fine particulate, the fluorine-containing resin D preferably contains a polymerized unit based on a fluorine-containing monomer and a polymerized unit based on a crosslinkable monomer. A strengthened shell of the hollow fine particulate can lead to a small shell thickness and a high porosity.

Examples of the crosslinkable monomer include those mentioned as examples in the production method of the disclosure. Preferred is a multifunctional monomer containing two or more polymerizable double bonds, more preferred are ethylene glycol di(meth)acrylate and divinylbenzene, still more preferred is ethylene glycol di(meth)acrylate.

The fluorine-containing resin D contains a polymerized unit based on a crosslinkable monomer in an amount of preferably 5% by mass or more, more preferably 10% by mass or more, still more preferably 30% by mass or more, while preferably 90% by mass or less, more preferably 80% by mass or less, still more preferably 70% by mass or less, of all polymerized units. The presence of a polymerized unit based on a crosslinkable monomer within the above range allows the resulting hollow fine particulate to have excellent strength and excellent electric properties.

The fluorine-containing resin D contains a polymerized unit based on a fluorine-free monomer in an amount of preferably 0 to 70% by mass, more preferably 0 to 50% by mass, of all polymerized units.

The fluorine-containing resin D preferably has a fluorine content of 15% by mass or higher. A fluorine content of 15% by mass or higher can lead to better electric properties and better water resistance. The fluorine content is more preferably 30% by mass or higher, still more preferably 50% by weight or higher. The hollow fine particulate containing the fluorine-containing resin D and having an average particle size of 1.0 μm or greater can be produced by the aforementioned production method of the disclosure, in particular a production method in which the dispersing includes the dispersing step A or the dispersing step B.

Examples of the fluorine-containing monomer, the crosslinkable monomer, and the fluorine-free monomer other than the crosslinkable monomer in the fluorine-containing resin D include the same monomers as in the production method of the disclosure.

The fluorine-containing monomer in the fluorine-containing resin D may be, but is not limited to, a fluorine-containing acrylic monomer, a fluorine-containing styrenic monomer, or a fluorine-containing olefin, and is preferably a monomer ($B^2$) represented by the following formula ($B^2$):

$CX^1X^2=CY^1Z$ ($B^2$)

(wherein

$X^1$, $X^2$, and $Y^1$ are the same as or different from each other and are each independently H, $CH_3$, F, or Cl;
Z is

F,
a group represented by $-Q-Rf^1-Y$, wherein Q is a single bond, -O-, -O-(C=O)-, or -C(=O)-O-; $Rf^1$ is a C1-C20 fluorine-containing alkyl group optionally containing an ether bond between carbon atoms; and Y is F, H, -OH, -COOH, or -COOR, wherein R is a C1-C20 alkyl group,
a group represented by the following formula:

[Chem. 17]

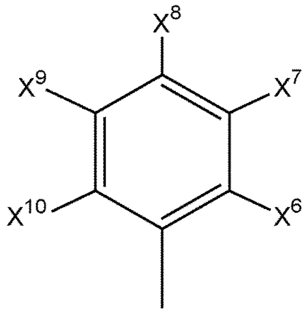

wherein $X^6$ to $X^{10}$ are each independently a hydrogen atom, a fluorine atom, or a C1-C8 hydrocarbon group optionally substituted with fluorine or chlorine, or
$-SO_3H$, and

any of $X^1$, $X^2$, $Y^1$, and Z contains one or more F atoms). $X^1$, $X^2$, $Y^1$, and Z in the formula ($B^2$) used may be preferably the same as $X^1$, $X^2$, $Y^1$, and Z in the aforementioned formula ($B^1$).

In the fluorine-containing resin D, the fluorine-containing monomer is particularly preferably a fluorine-containing acrylic monomer ($C^2$) represented by the following formula ($C^2$):

$CH_2=CX^3-COORf^2$ ($C^2$)

(wherein $X^3$ is H, $CH_3$, F, Cl, or $CF_3$; and $Rf^2$ is a C1-C20 fluorine-containing alkyl group optionally containing an ether bond between carbon atoms). $X^3$ and $Rf^2$ in the formula ($C^2$) may be preferably the same as $X^3$ and $Rf^2$ in the aforementioned formula ($C^1$).

Examples of the fluorine-containing acrylic monomer ($C^2$) include the same as those for the fluorine-containing acrylic monomer ($C^1$) in the production method of the disclosure.

The fluorine-containing monomer particularly preferably includes at least one selected from the group consisting of 3FM, 5FM, 13FM, HFIP-A, 3FF, 5FF, 13FF, HFIP-MA, and HFIP-F, more preferably at least one selected from the group consisting of 3FM, 5FM, 13FM, HFIP-MA, and HFIP-A.

The fluorine-containing resin D is preferably a polymer containing a fluorine-containing acrylic monomer ($C^2$) and a crosslinkable monomer (E) based on at least one selected from the group consisting of a di(meth)acrylate, a tri(meth)acrylate, and a divinyl compound.

The fluorine-containing resin D preferably has a ratio by mass of a polymerized unit ($C^2$) based on the fluorine-containing monomer ($C^2$) to a polymerized unit based on the crosslinkable monomer (E) (fluorine-containing monomer ($C^2$)/crosslinkable monomer (E)) of 80/20 to 20/80 (ratio by mass), more preferably 70/30 to 30/70 (ratio by mass), still more preferably 60/40 to 40/60 (ratio by mass).

From the viewpoints of heat resistance and electric properties, the fluorine-containing monomer is preferably a fluorine-containing olefin, more preferably includes at least one selected from the group consisting of a functional

group-containing fluorine-containing olefin (1), a functional group-free fluorine-containing olefin (2), and a fluorine-containing cyclic olefin (3), still more preferably includes at least one selected from the group consisting of a functional group-free fluorine-containing olefin (2) and a fluorine-containing cyclic olefin (3), and is further more preferably a fluorine-containing cyclic olefin (3). The fluorine-containing cyclic olefin (3) preferably includes at least one selected from the group consisting of the monomers represented by (a-1), (a-3), (a-6), and (a-7), more preferably includes at least one selected from the group consisting of monomers represented by (a-1), (a-3), and (a-7).

The fluorine-containing resin D preferably has a relative permittivity (1 kHz) of 5.0 or lower. The relative permittivity is more preferably 4.0 or lower, still more preferably 3.7 or lower, particularly preferably 3.5 or lower. The lower limit of the relative permittivity may be, but is not limited to, 1.1 or higher, for example.

The relative permittivity is a value determined by the measurement method in conformity with JIS C2138.

The fluorine-containing resin D preferably has a refractive index of 1.40 or lower. The refractive index is more preferably 1.39 or lower, particularly preferably 1.38 or lower. The lower limit of the refractive index may be, but is not limited to, 1.30 or higher, and is preferably 1.35 or higher from the viewpoint of solubility in a non-polymerizable solvent.

The refractive index is a value determined by the immersion method.

The hollow fine particulate of the disclosure preferably contains a phase separation promoter. Examples of the phase separation promoter include the phase separation promoters described for the aforementioned method for producing a hollow fine particulate. Producing a hollow fine particulate by a method in which a phase separation promoter is used as in the aforementioned method for producing a hollow fine particulate can provide a hollow fine particulate containing the phase separation promoter. The phase separation promoter is to be contained in the shell of the hollow fine particulate.

The phase separation promoter is contained in an amount of, for example, preferably 50% by mass or less, more preferably 30% by mass or less, still more preferably 20% by mass or less, relative to the fluorine-containing resin D.

The amount of the phase separation promoter contained may be 1% by mass or more or 5% by mass or more of the fluorine-containing resin.

From the viewpoints of low dielectricity and low refractive index, the hollow portion of the hollow fine particulate of the disclosure is preferably a gas, more preferably the air.

The hollow fine particulate of the disclosure is hollow and thus has excellently low dielectricity and excellent high-frequency characteristics, so that the hollow fine particulate is suitable for the use as an electronic material. In other words, the hollow fine particulate of the disclosure is preferably for the use as an electronic material.

The hollow fine particulate of the disclosure contains the fluorine-containing resin D and has an average particle size of 1.0 μm or greater. Thus, the hollow fine particulate can have a low permittivity and have a smaller surface area than others when they are used at the same volume. Accordingly, the hollow fine particulate is suitable for a resin composition to be used as a low dielectric material. A smaller average particle size leads to a larger specific surface area, which means that the electric properties will be significantly reduced due to, for example, moisture attached to the interface.

The disclosure also relates to a resin composition containing an insulating resin with the hollow fine particulate of the disclosure dispersed therein. Examples of the insulating resin include, but are not limited to, a fluorine-containing resin, an epoxy resin, a thermosetting modified polyphenylene ether resin, a thermosetting polyimide resin, a silicone resin, a benzoxazine resin, a melamine resin, a urea resin, an allyl resin, a phenol resin, an unsaturated polyester resin, a polyurethane resin, and an aniline resin. Preferred among these are a fluorine-containing resin, an epoxy resin, a thermosetting resin, a modified polyphenylene ether resin, a thermosetting polyimide resin, a silicone resin, a benzoxazine resin, and a melamine resin. Each of these insulating resins may be used alone, or two or more of these may be used in combination.

The low dielectric material may contain the hollow fine particulate in any amount that is set as appropriate in accordance with the properties required for a target application. For example, the amount may be 10 to 90 parts by mass relative to 100 parts by mass of the insulating resin.

Examples of electronic material applications with the use of the hollow fine particulate of the disclosure and the curable composition of the disclosure include, but are not limited to, printed wiring boards, antenna boards, and interlayer dielectrics of high-frequency connectors. They are particularly useful for high frequency substrates used for 5G or 6G.

The hollow fine particulate of the disclosure is hollow and thus has excellently low refractivity, so that the hollow fine particulate can be applied to a variety of applications requiring a low refractive index. In other words, the hollow fine particulate of the disclosure is preferably for the use as a low refractive material.

For the use as a low refractive material, the hollow fine particulate can be suitably used for an anti-reflective film, a refractive index adjuster, an additive filler for optical adhesive, a low refractive index lens material, a prism, and the like.

An anti-reflective film can be easily produced by dispersing the hollow fine particulate of the disclosure in an appropriate binder to prepare a coating agent for an anti-reflective film. The hollow fine particulate of the disclosure has

a low refractive index and has excellent alkali resistance and excellent dispersibility in a binder. Thus, the resulting anti-reflective film can efficiently reduce reflection on a transparent substrate, can be highly resistant to dirt and cleaning, and can have excellent mechanical strength.

The disclosure also relates to a coating agent for an anti-reflective film containing the hollow fine particulate of the disclosure and a binder and to an anti-reflective film formed from the hollow fine particulate of the disclosure or the coating agent for an anti-reflective film of the disclosure.

The coating agent for an anti-reflective film of the disclosure contains the hollow fine particulate of the disclosure and a binder.

The binder may be any material that is transparent and is capable of forming a film, and may be either an organic material such as resin or an inorganic material.

Examples of the organic material include cellulose derivatives such as triacetyl cellulose, diacetyl cellulose, propionyl cellulose, butanoyl cellulose, acetyl propionyl cellulose acetate, and nitrocellulose; and polyamide, polycarbonate, polyesters disclosed in JP S48-40414 B (in particular, polyethylene terephthalate, poly-1,4-cyclohexanedimethylene terephthalate, polyethylene 1,2-diphenoxyethane-4,4-dicarboxylate, polybutylene terephthalate, polyethylene naphthalate, and the like), polystyrene, polypropylene, polyethylene, polymethylpentene, polysulfone, polyethersulfone, polyarylate, polyetherimide, polymethyl methacrylate, and relatively low refractive index transparent resins such as fluorine-containing resins derived from these materials.

In the case where the binder used is a transparent resin, the glass transition temperature thereof is preferably lower than the glass transition temperature of the hollow fine particulate of the disclosure. Thereby, the binder can serve as a binding agent between particles of the hollow fine particulate during film formation, resulting in sufficient film strength.

Examples of the inorganic material include alkoxides of various elements, salts of organic acids, and coordination compounds bonded to a coordinating compound. Specific examples thereof include metal alcoholate compounds such as titanium tetraethoxide, titanium tetra-i-propoxide, titanium tetra-n-propoxide, titanium tetra-n-butoxide, titanium tetra-sec-butoxide, titanium tetra-tert-butoxide, aluminum triethoxide, aluminum tri-i-propoxide, aluminum tributoxide, antimony triethoxide, antimony tributoxide, zirconium tetraethoxide, zirconium tetra-i-propoxide, zirconium tetra-n-propoxide, zirconium tetra-n-butoxide, zirconium tetra-sec-butoxide, and zirconium tetra-tert-butoxide; chelate compounds such as di-isopropoxytitanium bisacetylacetonate, di-butoxytitanium bisacetylacetonate, di-ethoxytitanium bisacetylacetonate, bisacetylacetone zirconium, aluminum acetylacetonate, aluminum di-n-butoxide monoethyl acetoacetate, aluminum di-i-propoxide monomethyl acetoacetate, and tri-n-butoxide zirconium monoethyl acetoacetate; and active inorganic polymers mainly containing ammonium zirconium carbonate or zirconium.

The hollow fine particulate of the disclosure and the binder may be blended at any ratio. The lower limit of the proportion of the hollow fine particulate is preferably 5% by volume and the upper limit thereof is preferably 95% by volume. Less than 5% by volume thereof may fail to give a sufficiently low refractive index to the resulting anti-reflective film. More than 95% by volume thereof may give poor mechanical strength to the resulting anti-reflective film. The lower limit is more preferably 30% by volume and the upper limit is more preferably 90% by volume. The lower limit is still more preferably 50% by volume and the upper limit is still more preferably 80% by volume.

In the case where the binder used is a curable one, the coating agent for an anti-reflective film of the disclosure may be an emulsion in which the hollow fine particulate is suspended in the binder. In other cases, it may be diluted in an appropriate volatile solvent.

From the viewpoints of properties of the composition, such as stability, wettability, and volatility, examples of the diluting solvent include, but are not limited to, alcohols such as methanol, ethanol, isopropanol, butanol, and 2-methoxyethanol; ketones such as acetone, methyl ethyl ketone, and methyl isobutyl; esters such as methyl acetate, ethyl acetate, and butyl acetate; ethers such as diisopropyl ether; glycols such as ethylene glycol, propylene glycol, and hexylene glycol; glycol ethers such as ethyl cellosolve, butyl cellosolve, ethyl carbitol, and butyl carbitol; aliphatic hydrocarbons such as hexane, heptane, and octane; halogenated hydrocarbons; aromatic hydrocarbons such as benzene, toluene, and xylene; and N-methylpyrrolidone and dimethylformamide. Each of these diluting solvents may be used alone or two or more of these may be used in combination.

The anti-reflective film of the disclosure may be produced by a method in which the coating agent for an anti-reflective film of the disclosure is applied to, for example, a release film or directly to a transparent substrate and then dried.

The coating agent for anti-reflection of the disclosure may be applied by any method, such as dip coating, spin coating, flow coating, spray coating, roll coating, gravure roll coating, air doctor coating, blade coating, wire doctor coating, knife coating, reverse coating, transfer roll coating, microgravure coating, kiss coating, cast coating, slot orifice coating, calender coating, and die coating.

Application of the coating agent for an anti-reflective film of the disclosure to, for example, a release film or directly to a transparent substrate is followed by, for example, heating and drying to provide a film. This film is then hardened by, for example, heating, humidification, ultraviolet irradiation, or electron beam irradiation, whereby the anti-reflective film of the disclosure can be obtained.

The anti-reflective film of the disclosure preferably has a smooth surface. The "smooth surface" as used herein

means that the surface roughness Rz calculated by the method prescribed in JIS B0601 is 0.2 μm or smaller.

A smooth surface can prevent whiteness of the entire anti-reflective film of the disclosure due to diffuse reflection of light on the surface and can reduce sticking of dirt such as fingerprints, sebum, sweat, and cosmetics to the surface, and enables easy removal of dirt that has stuck to the surface.

In addition to a layer formed from the coating agent for an anti-reflective film of the disclosure, the anti-reflective film of the disclosure may further include a base layer. The base layer can improve the mechanical strength of the anti-reflective film of the disclosure, resulting in improved handleability.

The base layer may be any layer that is transparent. From the viewpoints of moldability and mechanical strength, the base layer is preferably formed from a transparent resin that may be used as the binder, for example.

The anti-reflective film of the disclosure may have any thickness. The lower limit thereof is preferably 0.05 μm and the upper limit thereof is preferably 100 μm. Less than 0.05 μm thereof may cause insufficient scratch resistance. More than 100 μm thereof may cause easy break of the film.

In the case where the anti-reflective film of the disclosure includes a base layer, the base layer may have any thickness. The lower limit thereof is preferably 50 μm and the upper limit thereof is preferably 500 μm. Less than 50 μm thereof may cause poor strength of the anti-reflective film of the disclosure. More than 500 μm thereof may cause poor transparency of the anti-reflective film of the disclosure, possibly causing difficulty in observing the visual information inside the film.

EXAMPLES

The disclosure is described in more detail below with reference to examples, but is not limited to these examples.

(Example 1)

Components used were 2,2,2-trifluoroethyl methacrylate (3FM) as a fluorine-containing monomer, ethylene glycol dimethacrylate (EGDM) as a crosslinkable monomer, a toluene solution (Sp value 18.2 $(J/cm^3)^{1/2}$) as an oil-phase solvent containing polystyrene (PS) (degree of polymerization 2,000) (Sp value 18.4 $(J/cm^3)^{1/2}$) as a phase separation promoter dissolved therein, a low temperature initiator 2,2-azobis(4-methoxy-2,4-dimethylvaleronitrile) (V-70) as an initiator, and polyvinyl alcohol (PVA) with Pn = 1700 and degree of saponification = 88% as a dispersion stabilizer.

According to the composition shown in the following Table 1, the toluene solution containing PS dissolved therein was combined with the crosslinkable monomer EGDM and the fluorine-containing monomer 3FM at a weight ratio of 1:1. Further, a uniform oil phase containing the initiator V-70 dissolved therein was dispersed in an aqueous medium using a homogenizer, whereby suspended droplets were produced. They were stirred in a nitrogen atmosphere at 30°C and 400 rpm for five hours so that the monomers were polymerized, whereby a hollow fine particulate containing a fluororesin was produced.

FIG. 1A is an optical micrograph of the suspended droplets before the polymerization. FIG. 1B is an optical micrograph of the hollow fine particulate after the polymerization. The optical micrograph before the polymerization shows uniform suspended droplets. The optical micrograph after the polymerization suggests the presence of a particulate having a hollow structure. The resulting hollow fine particulate was dried and a SEM sample thereof was prepared. Observation of an intentionally broken particulate demonstrated that the particulate clearly had a hollow structure even in a dried state as shown in FIG. 2. The sample obtained in Example 1 was hereinafter referred to as "3FM 1:1".

(Comparative Example 1)

Polymerization was performed as in Example 1 except that PS and toluene were not added. Thereby, a solid particulate not having a hollow structure was obtained. The sample obtained in Comparative Example 1 was hereinafter referred to as "3FM Solid".

(Example 2)

Polymerization was performed as in Example 1 except that the ratio by mass of the crosslinkable monomer EGDM to the fluorine-containing monomer 3FM was changed to 1:2 (0.22 g:0.44 g). Thereby, a hollow fine particulate containing a fluorine-containing resin was produced. FIG. 3A is an optical micrograph of the suspended droplets before the polymerization. FIG. 3B is an optical micrograph of the hollow fine particulate after the polymerization. The figures show that a hollow fine particulate was obtained as in the case of "3FM 1:1" although the inner wall of the hollow structure was observed to be slightly damaged. The resulting sample was hereinafter referred to as "3FM 1:2".

The observation demonstrated that the hollow fine particulate having a particle size as large as 10 μm or greater had a nesting structure in which a particle is generated in a particle. This seems to be resulted from precipitation before

transfer of the polymer to the outermost shell.

(Example 3)

Polymerization was performed as in Example 1 except that the types and amounts of the components were changed according to the composition shown in Table 1. Thereby, a hollow fine particulate containing a fluorine-containing resin was produced. In Table 1, 5FM refers to 2,2,3,3,3-pentafluoropropyl methacrylate represented by $CH_2=C(CH_3)COOCH_2CF_2CF_3$.

Optical microscopic observation demonstrated the formation of a hollow fine particulate as in the case of 3FM used in Examples 1 and 2.

(Comparative Example 2)

Polymerization was performed as in Example 1 except that the types and amounts of the components were changed as in Table 1 and the number of rotation in the polymerization was set to 400 rpm. Thereby, a hollow fine particulate containing a fluorine-containing resin was produced. In Table 1, 13FM refers to 1H,1H,2H,2H-tridecafluoro-n-octyl methacrylate (13FM) represented by $CH_2=C(CH_3)COOCH_2CH_2(CF_2)_5CF_3$.

FIG. 4A is an optical micrograph of suspended droplets before the polymerization. FIG. 4B is an optical micrograph of a particulate after the polymerization. FIG. 4(b) demonstrates the failure in providing a hollow fine particulate. The resulting sample was hereinafter referred to as "13FM Solid".

(Example 4)

Polymerization was performed as in Example 1 except that the types and amounts of the components were changed as in Table 1. Thereby, a hollow fine particulate containing a fluorine-containing resin was produced.

FIG. 5A is an optical micrograph of suspended droplets before the polymerization. FIG. 5B is an optical micrograph of a particulate after the polymerization. The optical micrograph before the polymerization shows uniform suspended droplets. The optical micrograph after the polymerization shows that a system containing 10% by mass of PS provided a clear shell wall, which suggests production of a hollow fine particulate containing a fluorine-containing resin in the shell wall.

FIG. 6A is a SEM image of the particulate obtained. FIG. 6B is an EDX mapping of shell walls. FIG. 6C is a SEM image of a broken particulate. The SEM image demonstrates that the resulting particulate was a spherical and smooth particulate. The elemental analysis of the shell walls by EDX mapping demonstrates that the shell walls contained fluorine. The particulate was broken and observed by SEM, thereby confirming that the inside of the particulate was hollow. According to these results, the system containing 10% by mass of PS provided a hollow fine particulate containing a fluorine-containing resin in the shell wall. This sample was hereinafter referred to as "13FM 1:1".

[Table 1]

| | Example 1 | Comparative Example 1 | Example 2 | Example 3 | Comparative Example 2 | Example 4 |
|---|---|---|---|---|---|---|
| Abbreviation | 3FM 1:1 | 3FM Solid | 3FM 1:2 | 5FM 1:1 | 13FM Solid | 13FM 1:1 |
| EGDM (g) | 0.33 | 0.33 | 0.22 | 0.33 | 0.33 | 0.33 |
| 3FM (g) | 0.33 | 0.33 | 0.44 | | | |
| 5FM (g) | | | | 0.33 | | |
| 13FM | | | | | 0.33 | 0.33 |
| PS (g) | 0.066 | | 0.066 | 0.066 | | 0.066 |
| Toluene (g) | 0.594 | | 0.594 | 0.594 | 0.590 | 0.660 |
| V-70 (mg) | 26.7 | 26.7 | 26.7 | 26.7 | 26.7 | 26.7 |
| PVA (mg) | 20 | 20 | 20 | 20 | 20 | 20 |
| Water (g) | 20 | 20 | 20 | 20 | 20 | 20 |

(Example 5)

According to the composition shown in the following Table 2, a toluene solution containing PS dissolved therein was combined with EGDM and 13FM, which were dissolved therein at 25°C, to provide a uniform oil phase. This was dispersed in an aqueous medium using a homogenizer, whereby suspended droplets were produced. They were heated to 70°C in a nitrogen atmosphere and the suspension was combined with BPO and stirred at 70°C and 400 rpm for five hours so that the monomers were polymerized. Thereby, a hollow fine particulate containing a fluororesin was produced. In
Table 2, BPO refers to benzoyl peroxide as a medium temperature initiator.

[Table 2]

| | Example 5 |
|---|---|
| EGDM (g) | 0.33 |
| 3FM (g) | |
| 5FM (g) | |
| 13FM | 0.44 |
| PS (g) | 0.077 |
| Toluene (g) | 0.770 |
| BPO (mg) | 26.7 |
| PVA (mg) | 20 |
| Water (g) | 20 |

FIG. 7A is an optical micrograph before the polymerization. FIG. 8A is an optical micrograph after the polymerization. FIG. 8B is a SEM image after the polymerization. FIG. 8A shows formation of a clear shell wall. The SEM image of a broken particulate as shown in FIG. 8B demonstrates that the inside of the particulate was hollow. Thereby, a target hollow fine particulate having a high fluorine content was successfully produced.

(Evaluation)

The physical properties of the fine particulates obtained in the examples and the comparative examples were evaluated. Sampling and pretreatment were performed under conditions such that an emulsion synthesized was sufficiently left to stand for precipitation and an appropriate amount of the sample was carefully collected from the precipitate. The sample was then air-dried and further dried at 80°C for 24 hours using an air dryer. This sample was subjected to elemental analysis and thermal analysis (TG/DTA, DSC).

(Fluorine content)

The oxygen flask combustion method was performed to combust 10 mg of the sample, and 20 mL of deionized water was caused to absorb the decomposed gas. The fluoride ion concentration in the absorption liquid was determined by means of fluoride-selective electrode (fluoride ion meter model 901, available from Orion) (% by mass).
Elemental analysis was performed for fluorine and the analysis value (F % by mass) was used to calculate the composition (% by mass) of the fluorine-containing monomer in the polymer. The amount of PS was uniformly set to 10% by mass of the cross-linking agent for calculation. The results are shown in Table 3.

[Table 3]

| | Abbreviation | Analysis value | Composition calculated from elemental analysis (mass%) | | | |
|---|---|---|---|---|---|---|
| | | F mass% | EGDMA | 3FM | 13FM | PS |
| Comparative Example 1 | 3FM Solid | 14.7 | 56.6 | 43.4 | - | - |
| Example 1 | 3FM 1:1 | 13.4 | 55.5 | 39.5 | - | 5 |
| Example 2 | 3FM 1:2 | 19.1 | 39.6 | 56.4 | - | 4 |

(continued)

| | Abbreviation | Analysis value | Composition calculated from elemental analysis (mass%) | | | |
|---|---|---|---|---|---|---|
| | | F mass% | EGDMA | 3FM | 13FM | PS |
| Comparative Example 2 | 13FM Solid | 27.4 | 52.0 | - | 48.0 | - |
| Example 4 | 13FM 1:1 | 25.5 | 50.4 | - | 44.6 | 5 |

(Thermal decomposition temperature)

A simultaneous thermogravimetric analyzer (STA7200 available from Hitachi High-Tech Corp.) was used to measure the temperature at which the mass reduction of the sample reached 1% by mass in the air atmosphere at a temperature-increasing rate of 10°C/min. The results are shown in Table 4.

[Table 4]

| | Abbreviation | TG/DTA |
|---|---|---|
| | | 1 mass% decomposition temperature |
| Comparative Example 1 | 3FM Solid | 193.1 |
| Example 1 | 3FM 1:1 | 166.1 |
| Example 2 | 3FM 1:2 | 207.0 |
| Comparative Example 2 | 13FM Solid | 147.3 |
| Example 4 | 13FM 1:1 | 199.4 |

(Glass transition temperature)

A differential scanning calorimeter (DSC) (DSC7000 available from Hitachi High-Tech Corp.) was used to increase the temperature (first run), decrease the temperature, and increase the temperature (second run) within a temperature range from 30°C to 200°C at 10°C/min so that an endothermic curve was obtained, and the intermediate point thereof was determined as the glass transition temperature (°C). Every sample was sufficiently crosslinked and therefore neither a clear glass transition temperature (Tg) nor a clear melting point (Tm) was observed as shown in Table 5.

[Table 5]

| | Abbreviation | DSC | |
|---|---|---|---|
| | | Tg (°C) | Tm (°C) |
| Comparative Example 1 | 3FM Solid | Not observed | Not observed |
| Example 1 | 3FM 1:1 | Not observed | Not observed |
| Example 2 | 3FM 1:2 | Not observed | Not observed |
| Comparative Example 2 | 13FM Solid | Not observed | Not observed |
| Example 4 | 13FM 1:1 | Not observed | Not observed |

(Particle size)

The particle size was calculated by image analysis on the optical micrograph of the hollow fine particulate using particle size analyzing software LUZEX AP. Specifically, pictures of different positions were taken such that they included 50 or more particles in total. Then, the average particle size, the maximum particle size, the minimum particle size, and the CV value were calculated. The results are shown in Table 6.

[Table 6]

| | Abbreviation | Average particle size | CV value | Minimum particle size | Maximum particle size |
|---|---|---|---|---|---|
| | | μm | | μm | μm |
| Comparative Example 1 | 3FM Solid | 13.2 | 27.4% | 8.3 | 19.1 |
| Example 1 | 3FM 1:1 | 8.0 | 29.1% | 4.3 | 13.2 |
| Example 2 | 3FM 1:2 | 7.8 | 19.1% | 4.0 | 9.9 |
| Example 3 | 5FM 1:1 | 10.2 | 25.8% | 6.0 | 14.7 |
| Comparative Example 2 | 13FM Solid | 10.1 | 33.9% | 6.7 | 16.1 |
| Example 4 | 13FM 1:1 | 8.5 | 29.9% | 4.3 | 15.6 |

(Film Formation 1)

A fluororesin dispersion SE-405 (solid concentration 50%) available from Daikin Industries, Ltd. was blended with an appropriate amount of the hollow fine particulate dispersion 3FM 1:2 obtained, and they were mixed for 15 minutes using a ultrasonic cleaner. The mixture was applied to a PET substrate using a doctor blade adjusted to 15 mil for film formation and was dried at room temperature, then dried for 12 hours using a 60°C air dryer. The resulting film was subjected to a variety of measurement. The thickness including the PET substrate was measured using a micrometer and then the value of the PET substrate alone was subtracted therefrom, whereby the film thickness was obtained. The thickness determined was an average of five points. The amount of 3FM 1:2 contained was calculated from the result of elemental analysis for fluorine.

A film of 3FM Solid and a film of SE-405 alone without any fine particulate were also produced in the same manner. The results are shown in Table 7.

[Table 7]

| | | Fine particulate | Amount of fine particulate added | Film thickness (μm) |
|---|---|---|---|---|
| Film 1 | Example 2 | 3FM 1:2 | 5.60 mass% | 125 |
| Film 2 | Example 2 | 3FM 1:2 | 14.00 mass% | 125 |
| Film 3 | Comparative Example 1 | 3FM Solid | 2.80 mass% | 109 |
| Film 4 | - | None | 0.00 mass% | 100 |

(Cross-sectional SEM observation)

FIG. 9 and FIG. 10 are cross-sectional SEM images of the film formed above (fine particulate: 3FM 1:2, amount of fine particulate added: 14.0% by mass). The nesting structure as observed in the SEM observation of the particulate alone was also observed in the cross-sectional SEM images. The hollow structure was also observed. The nesting structure was observed in the case of particles having a large particle size, while the hollow structure was observed in the case of particles having a small particle size.

(Permittivity and dissipation factor)

Aluminum was vapor-deposited in vacuo on both sides of the film formed above, whereby a sample was formed. This sample was subjected to measurement of capacitance and dissipation factor at a temperature of 25°C and a frequency of 1 kHz using an LCR meter. The resulting capacitance was used to calculate the relative permittivity, which was defined as the permittivity. The results are shown in Table 8.

[Table 8]

| | | Fine particulate | Amount of fine particulate added | Film thickness (Nm) | Relative permittivity | Dissipation factor |
|---|---|---|---|---|---|---|
| Film 1 | Example 2 | 3FM 1:2 | 5.60 mass% | 125 | 7.53 ± 0.25 | 0.190 |
| Film 2 | Example 2 | 3FM 1:2 | 14.00 mass% | 125 | 7.41 ± 0.50 | 0.172 |
| Film 3 | Comparative Example 1 | 3FM Solid | 2.80 mass% | 109 | 8.85 ± 0.72 | 0.216 |
| Film 4 | - | None | 0.00 mass% | 100 | 8.50 ± 0.42 | 0.221 |

FIG. 11 is a graph of the results of measuring the dissipation factor (tanδ). Assuming that the tanδ values of the systems were linearly approximated in accordance with the rule of mixtures, the result of mixing the solid particulate substantially overlapped the theoretical curve, while the results of the hollow fine particulates clearly shifted downward from the curve, as shown in the graph. This is presumably resulted from the effect of the air (hollow).

(Film Formation 2)

Using 13FM 1:1 as the hollow fine particulate, films shown in the following Tables 9 and 10 were formed in the same manner as in Film Formation 1. The thickness, the relative permittivity, and the dissipation factor of each film were measured. Each film showed a lower relative permittivity and a lower dissipation factor than the film formed from SE405 alone without any hollow fine particulate.

[Table 9]

| | Film thickness | Amount of 13FM 1:1 contained | Relative permittivity | | | |
|---|---|---|---|---|---|---|
| | μm | wt% | 1 kHz | 10 kHz | 20 kHz | 100 kHz |
| Film 5 | 34.7 | 19.2 | 5.84 | 5.16 | 5.04 | 4.73 |
| Film 6 | 35.9 | 9.6 | 6.13 | 5.29 | 5.15 | 4.79 |
| Film 4 | 100 | 0 | 8.05 | 6.17 | 5.88 | 5.26 |

[Table 10]

| | Film thickness | Amount of 13FM 1:1 contained | tanδ | | | |
|---|---|---|---|---|---|---|
| | μm | wt% | 1 kHz | 10 kHz | 20 kHz | 100 kHz |
| Film 5 | 34.7 | 19.2 | 0.117 | 0.076 | 0.071 | 0.066 |
| Film 6 | 35.9 | 9.6 | 0.142 | 0.088 | 0.081 | 0.074 |
| Film 4 | 100 | 0 | 0.221 | 0.141 | 0.126 | 0.102 |

## Claims

**1.** A method for producing a hollow fine particulate comprising:

dispersing a solution containing a fluorine-containing monomer, a phase separation promoter, and a non-polymerizable solvent into water to provide a dispersion; and
polymerizing the fluorine-containing monomer to provide a hollow fine particulate containing a fluorine-containing resin.

2. The method for producing a hollow fine particulate according to claim 1, wherein the fluorine-containing monomer is a monomer ($B^1$) represented by the following formula ($B^1$):

$$CX^1X^2=CY^1Z \qquad (B^1)$$

wherein

$X^1$, $X^2$, and $Y^1$ are each independently H, $CH_3$, F, or Cl;
Z is

F,
a group represented by $-Q-Rf^1-Y$, wherein Q is a single bond, -O-, -O-(C=O)-, or -C(=O)-O-; $Rf^1$ is a C1-C20 fluorine-containing alkylene group optionally containing an ether bond between carbon atoms; and Y is F, H, -OH, -COOH, or -COOR, wherein R is a C1-C20 alkyl group,
a group represented by the following formula: [Chem. 1]

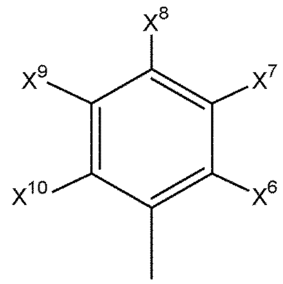

wherein $X^6$ to $X^{10}$ are each independently a hydrogen atom, a fluorine atom, or a C1-C8 hydrocarbon group optionally substituted with fluorine or chlorine, or
$-SO_3H$, and

any of $X^1$, $X^2$, $Y^1$, and Z contains one or more F atoms.

3. The method for producing a hollow fine particulate according to claim 1 or 2, wherein the fluorine-containing monomer is a fluorine-containing acrylic monomer ($C^1$) represented by the following formula ($C^1$):

$$CH_2=CX^3-COORf^2 \qquad (C^1)$$

wherein $X^3$ is H, $CH_3$, F, Cl, or $CF_3$; and $Rf^2$ is a C1-C20 fluorine-containing alkyl group optionally containing an ether bond between carbon atoms.

4. The method for producing a hollow fine particulate according to any one of claims 1 to 3, wherein the phase separation promoter is dissolvable in the non-polymerizable solvent at room temperature and satisfies a relationship of the following formula:

$$|SA - SB| < 3\ (J/cm^3)^{1/2}$$

wherein SA represents an Sp value $(J/cm^3)^{1/2}$ of the phase separation promoter; and SB represents an Sp value $(J/cm^3)^{1/2}$ of the non-polymerizable solvent.

5. The method for producing a hollow fine particulate according to any one of claims 1 to 4, wherein the phase separation promoter is a polymer containing a polymerized unit based on a monomer represented by the following formula:

$$CH_2=CX^4Y^2$$

wherein $X^4$ is H, $CH_3$, F, Cl, or $CF_3$; and $Y^2$ is Cl, $C_6H_4R^1$, $C_6H_3R^2R^3$, $COOR^4$, or $OCOR^5$, wherein $R^1$, $R^2$, $R^3$, $R^4$, and $R^5$ are each independently H, OH, or a C1-C40 alkyl group optionally substituted with a halogen atom.

**6.** The method for producing a hollow fine particulate according to any one of claims 1 to 5, wherein the phase separation promoter includes at least one selected from the group consisting of an aromatic vinyl polymer and a polyalkyl (meth)acrylate.

**7.** The method for producing a hollow fine particulate according to any one of claims 1 to 6, wherein the fluorine-containing monomer has a fluorine content of 30% by mass or higher.

**8.** The method for producing a hollow fine particulate according to any one of claims 1 to 7, wherein the solution further contains a crosslinkable monomer.

**9.** The method for producing a hollow fine particulate according to any one of claims 1 to 8, wherein the non-polymerizable solvent is an aromatic hydrocarbon, an ester, or a C8-C18 saturated hydrocarbon or halogen-substituted product thereof.

**10.** The method for producing a hollow fine particulate according to any one of claims 1 to 9, wherein the dispersing comprises:

dispersing the solution into water at a temperature of 50°C or higher to provide a dispersion, or
dispersing the solution into water at a temperature lower than 50°C to provide a dispersion and heating the dispersion obtained to a temperature of 50°C or higher.

**11.** The method for producing a hollow fine particulate according to any one of claims 1 to 10, further comprising: adding an oil-soluble initiator to the dispersion after the dispersing and before the polymerizing.

**12.** The method for producing a hollow fine particulate according to any one of claims 1 to 11, further comprising: removing the non-polymerizable solvent from the hollow fine particulate obtained in the polymerizing.

**13.** The method for producing a hollow fine particulate according to any one of claims 1 to 12, wherein the hollow fine particulate has an average particle size of 1.0 um or greater.

**14.** A hollow fine particulate comprising a fluorine-containing resin D containing a polymerized unit based on a fluorine-containing monomer,
the hollow fine particulate having an average particle size of 1.0 um or greater.

**15.** The hollow fine particulate according to claim 14, wherein the fluorine-containing monomer is a monomer ($B^2$) represented by the following formula ($B^2$):

$$CX^1X^2=CY^1Z \qquad (B^2)$$

wherein

$X^1$, $X^2$, and $Y^1$ are the same as or different from each other and are each independently H, $CH_3$, F, or Cl;
Z is

F,
a group represented by $-Q-Rf^1-Y$, wherein Q is a single bond, -O-, -O-(C=O)-, or -C(=O)-O-; $Rf^1$ is a C1-C20 fluorine-containing alkylene group optionally containing an ether bond between carbon atoms; and Y is F, H, -OH, -COOH, or -COOR, wherein R is a C1-C20 alkyl group,
a group represented by the following formula:

[Chem. 2]

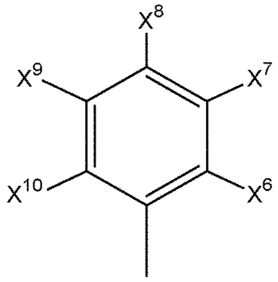

wherein $X^6$ to $X^{10}$ are each independently a hydrogen atom, a fluorine atom, or a C1-C8 hydrocarbon group optionally substituted with fluorine or chlorine, or -$SO_3H$, and

any of $X^1$, $X^2$, $Y^1$, and Z contains one or more F atoms.

**16.** The hollow fine particulate according to claim 14 or 15,
wherein the fluorine-containing monomer is a fluorine-containing acrylic monomer ($C^2$) represented by the following formula ($C^2$):

$$CH_2=CX^3\text{-}COORf^2 \qquad (C^2)$$

wherein $X^3$ is H, $CH_3$, F, Cl, or $CF_3$; and $Rf^2$ is a C1-C20 fluorine-containing alkyl group optionally containing an ether bond between carbon atoms.

**17.** The hollow fine particulate according to any one of claims 14 to 16, further comprising a phase separation promoter.

**18.** The hollow fine particulate according to claim 17,
wherein the phase separation promoter is a polymer containing a polymerized unit based on a monomer represented by the following formula:

$$CH_2=CX^4Y^2$$

wherein $X^4$ is H, $CH_3$, F, Cl, or $CF_3$; and $Y^2$ is Cl, $C_6H_4R^1$, $C_6H_3R^2R^3$, $COOR^4$, or $OCOR^5$, wherein $R^1$, $R^2$, $R^3$, $R^4$, and $R^5$ are each independently H, OH, or a C1-C40 alkyl group optionally substituted with a halogen atom.

**19.** The hollow fine particulate according to claim 17 or 18,
wherein the phase separation promoter includes at least one selected from the group consisting of an aromatic vinyl polymer and a polyalkyl (meth)acrylate.

**20.** The hollow fine particulate according to any one of claims 14 to 19,
wherein the fluorine-containing resin D further contains a polymerized unit based on a crosslinkable monomer.

**21.** The hollow fine particulate according to any one of claims 14 to 20,
wherein the fluorine-containing resin D has a fluorine content of 15% by mass or higher.

**22.** The hollow fine particulate according to any one of claims 14 to 21,
wherein the hollow fine particulate includes a shell containing the fluorine-containing resin D and a hollow portion and has a monoporous structure.

**23.** A curable composition comprising the hollow fine particulate according to any one of claims 14 to 22.

**24.** A coating composition comprising the hollow fine particulate according to any one of claims 14 to 22.

**25.** The hollow fine particulate according to any one of claims 14 to 22 for the use as an electronic material.

FIG.1A

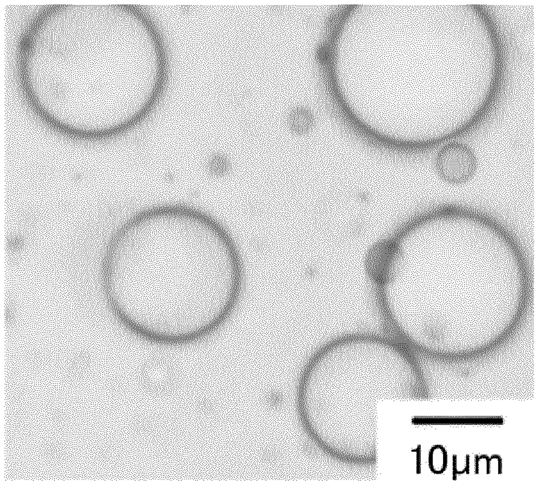


FIG.1B

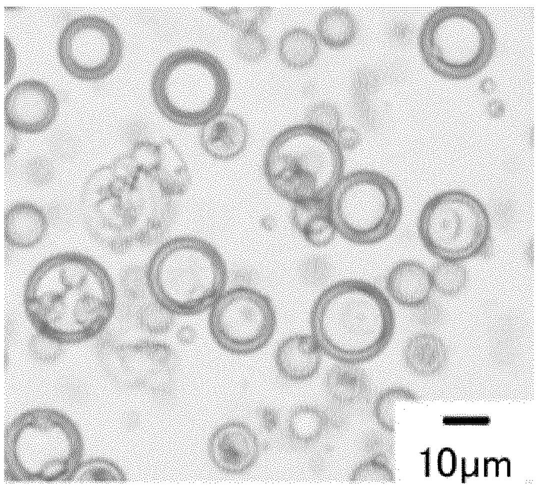

FIG.2

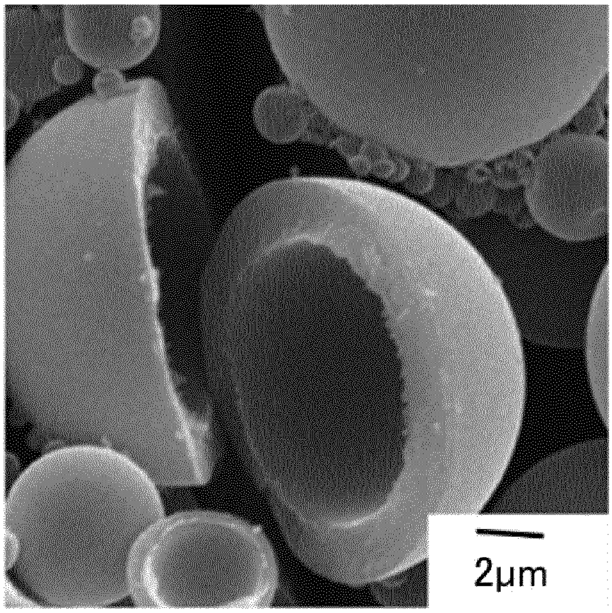


FIG.3A

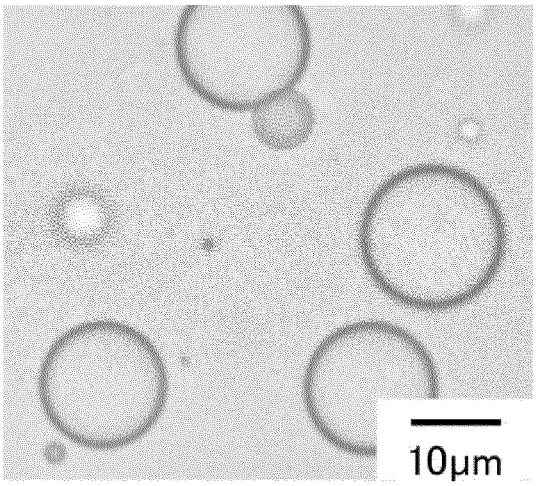

FIG.3B

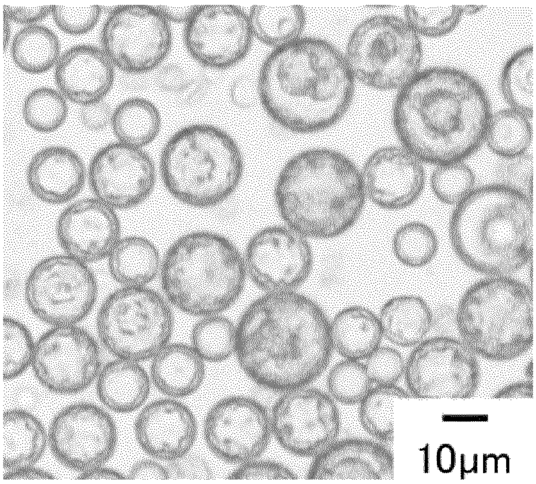


FIG.4A

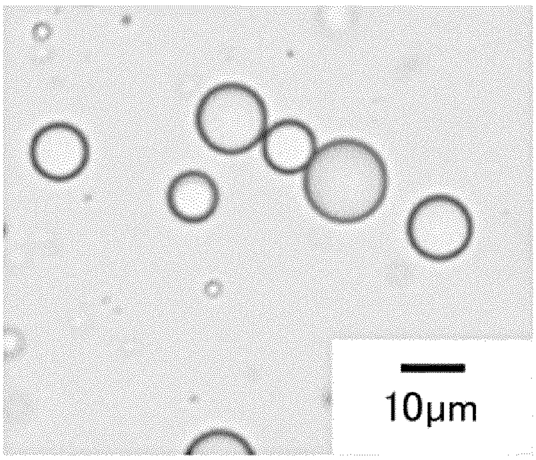

FIG.4B

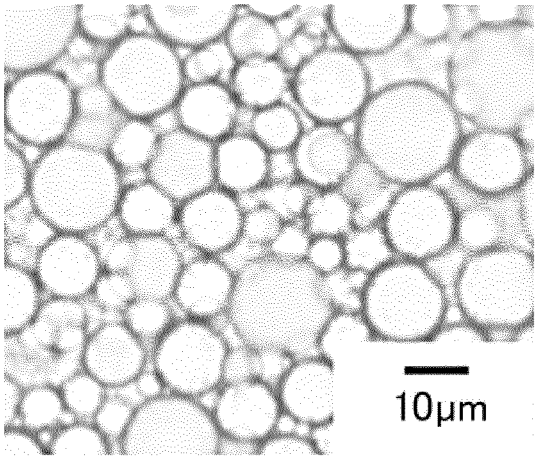


FIG.5A

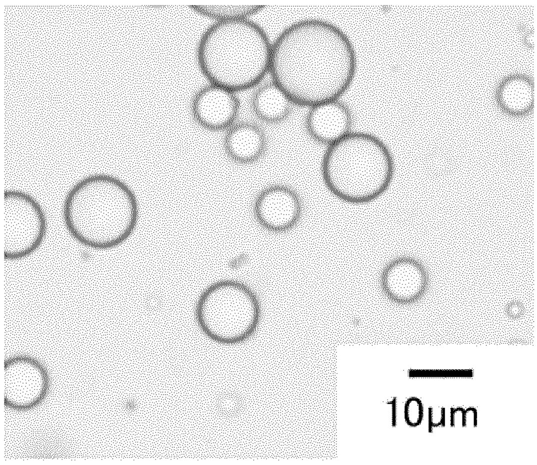

FIG.5B

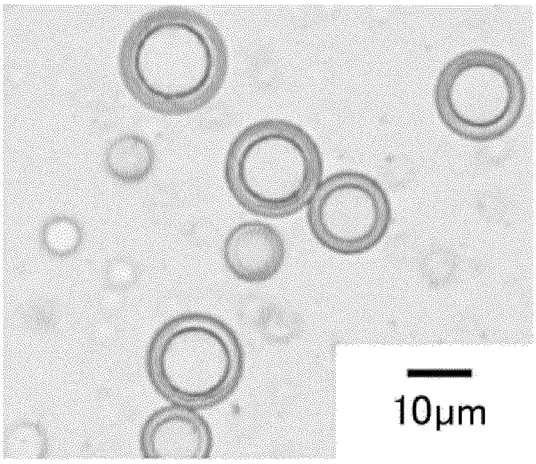


FIG.6A

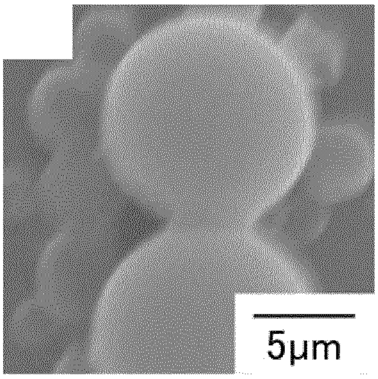


FIG.6B

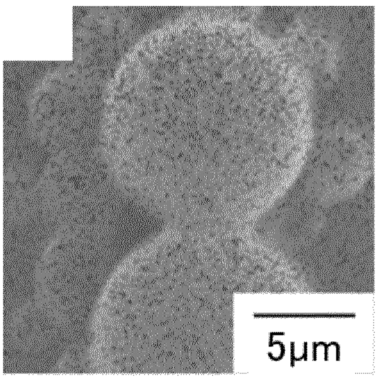

FIG.6C

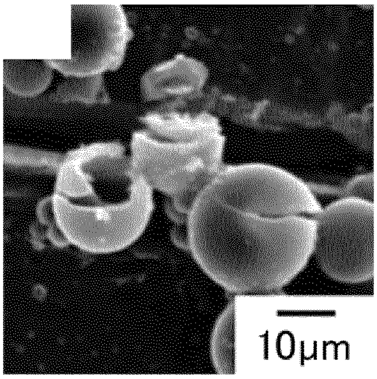


FIG.7

70°C

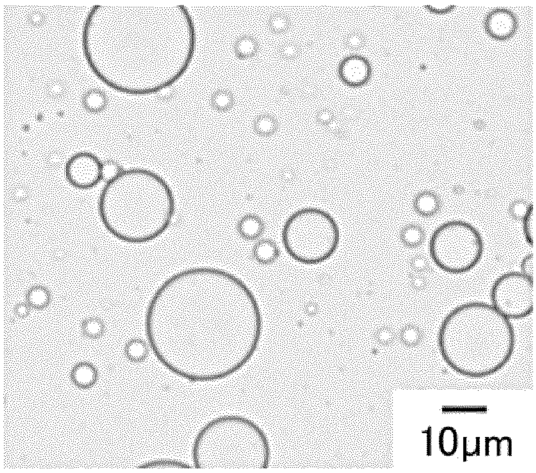

FIG.8A

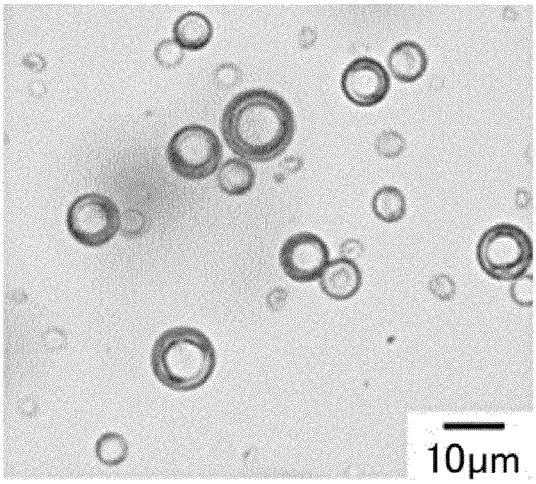


FIG.8B

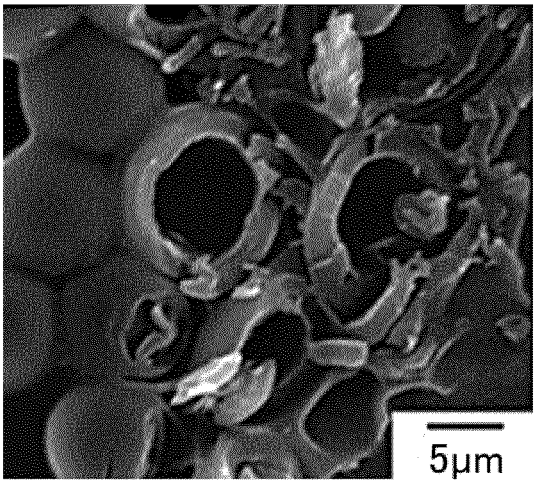

FIG.9

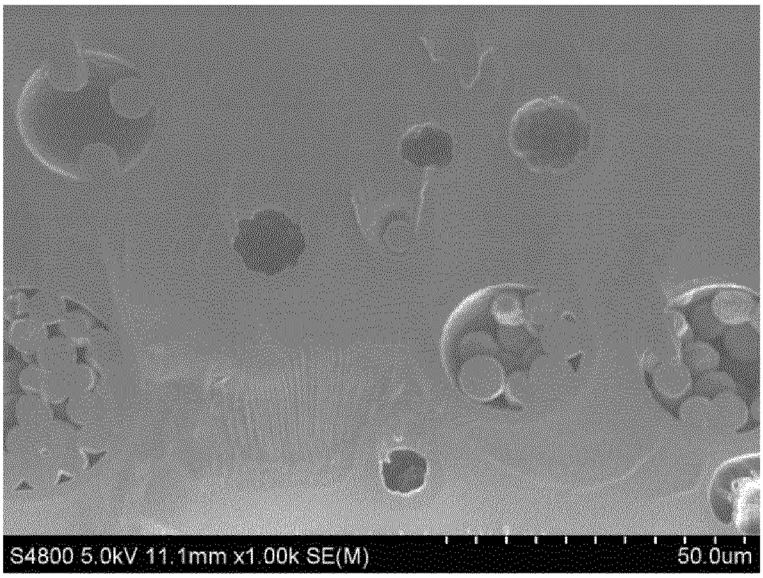
S4800 5.0kV 11.1mm x1.00k SE(M)
50.0um

FIG.10

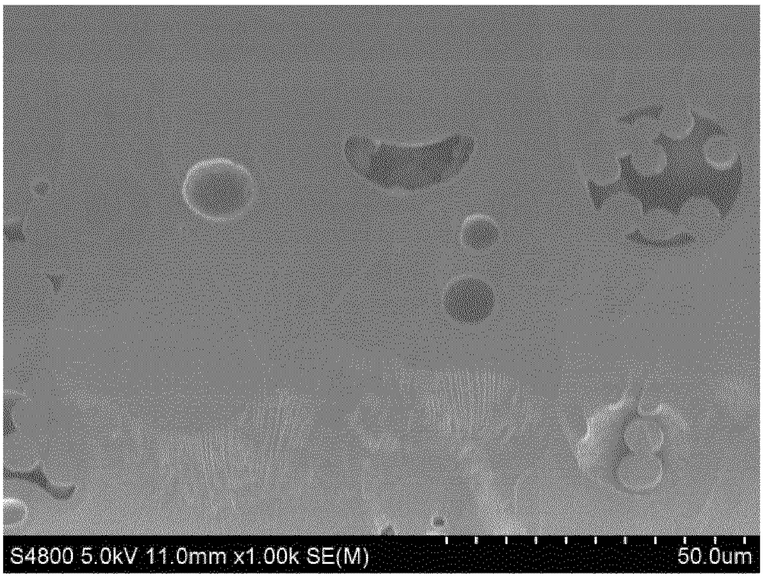
S4800 5.0kV 11.0mm x1.00k SE(M)
50.0um

FIG.11

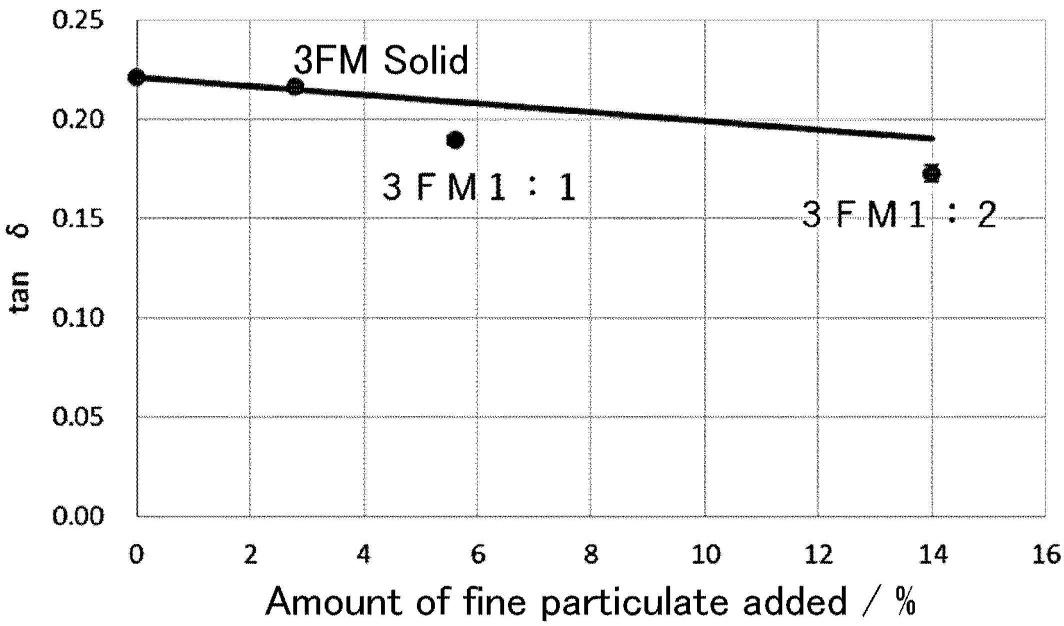
0.25
0.20
0.15
0.10
0.05
0.00
tan δ
3FM Solid
3 F M 1 : 1
3 F M 1 : 2
0
2
4
6
8
10
12
14
16
Amount of fine particulate added / %

## INTERNATIONAL SEARCH REPORT

International application No.
PCT/JP2021/025578

A. CLASSIFICATION OF SUBJECT MATTER
C08F 20/22(2006.01)i; C08F 257/02(2006.01)i; C09D 201/00(2006.01)i; C08F 2/18(2006.01)i; C08F 2/44(2006.01)i; B01J 13/02(2006.01)i; C09D 7/65(2018.01)i
FI: C08F20/22; C08F257/02; C08F2/44 C; C08F2/18; C09D201/00; C09D7/65; B01J13/02
According to International Patent Classification (IPC) or to both national classification and IPC

B. FIELDS SEARCHED
Minimum documentation searched (classification system followed by classification symbols)
C08F20/22; C08F257/02; C09D201/00; C08F2/18; C08F2/44; B01J13/02; C09D7/65

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2017-525585 A (LG CHEM, LTD.) 07 September 2017 (2017-09-07) claims, paragraphs [0008], [0013], [0016], [0038], [0053], [0073], [0077]-[0083], [0095]-[0096] | 14-16, 20-25 |
| Y | JP 2006-126737 A (SEKISUI CHEMICAL CO., LTD.) 18 May 2006 (2006-05-18) claims, paragraphs [0001], [0014]-[0016], [0018]-[0020], [0023], [0030], [0036], [0039], [0049] | 14-25 |
| Y | JP 61-087734 A (JAPAN SYNTHETIC RUBBER CO., LTD.) 06 May 1986 (1986-05-06) claim 1, examples 1-2 | 14-25 |
| A | JP 2-165164 A (XEROX CORPORATION) 26 June 1990 (1990-06-26) entire text | 1-25 |

☒ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 September 2021 (06.09.2021) | 21 September 2021 (21.09.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

INTERNATIONAL SEARCH REPORT

International application No.
PCT/JP2021/025578

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-142847 A (FUJI XEROX CO., LTD.) 11 June 1993 (1993-06-11) entire text | 1-25 |
| A | JP 58-095753 A (DAIKIN INDUSTRIES, LTD.) 07 June 1983 (1983-06-07) entire text | 1-25 |
| A | JP 7-163864 A (FUJI XEROX CO., LTD.) 27 June 1995 (1995-06-27) entire text | 1-25 |
| A | JP 2010-167410 A (FUJIFILM CORPORATION) 05 August 2010 (2010-08-05) entire text | 1-25 |
| P, X | WO 2020/226010 A1 (DAIKIN INDUSTRIES, LTD.) 12 November 2020 (2020-11-12) claims, examples | 14-16, 20-25 |

Form PCT/ISA/210 (continuation of second sheet) (January 2015)

**INTERNATIONAL SEARCH REPORT**

International application No.
PCT/JP2021/025578

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.
PCT/JP2021/025578

<Continuation of Box No. III>

(Invention 1) Claims 1-13

Claim 1 has the special technical feature of a "method for producing hollow fine particles, the method being characterized by comprising: a dispersion step for dispersing, in water, a solution containing a fluorine-containing monomer, a phase separation promoter, and a non-polymerizable solvent to obtain a dispersion liquid; and a polymerization step for polymerizing the fluorine-containing monomer to obtain hollow fine particles containing a fluorine-containing resin", and is thus classified as invention 1.

(Invention 2) Claims 14-25

The invention in claim 14 is not dependent on claim 1, and is not an invention in the same category that includes all invention-specifying matters of the invention set forth in claim 1.

Therefore, the invention in claims 14-25 is classified as invention 2.

Form PCT/ISA/210 (extra sheet) (January 2015)

**INTERNATIONAL SEARCH REPORT**
Information on patent family members

International application No.
PCT/JP2021/025578

| Patent Documents referred in the Report | Publication Date | Patent Family | Publication Date |
|---|---|---|---|
| JP 2017-525585 A | 07 Sep. 2017 | US 2016/0375657 A1 claims, paragraphs [0010], [0017], [0020], [0053], [0068], [0089], [0093]-[0100], [0120], table 1<br>EP 3045309 A1<br>CN 105684560 A<br>KR 10-2016-0038730 A | |
| JP 2006-126737 A | 18 May 2006 | (Family: none) | |
| JP 61-087734 A | 06 May 1986 | US 4798691 A examples 1-2<br>EP 198089 A1 | |
| JP 2-165164 A | 26 Jun. 1990 | US 4954412 A entire text | |
| JP 5-142847 A | 11 Jun. 1993 | US 5484677 A entire text | |
| JP 58-095753 A | 07 Jun. 1983 | (Family: none) | |
| JP 7-163864 A | 27 Jun. 1995 | (Family: none) | |
| JP 2010-167410 A | 05 Aug. 2010 | (Family: none) | |
| WO 2020/226010 A1 | 12 Nov. 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005213366 A
- JP 2003096108 A
- JP S4840414 B